# EUROPÄISCHE PATENTSCHRIFT

(11) **EP 3 304 724 B1**
(45) Veröffentlichungstag und Bekanntmachung des Hinweises auf die Patenterteilung: **07.07.2021**
(21) Anmeldenummer: 16725034.9
(22) Anmeldetag: 18.05.2016
(51) Int. Cl.: H02P 1/18, H02P 7/29, B60G 11/27

(54) **VERDICHTER ZUR ERZEUGUNG VON DRUCKLUFT, DRUCKLUFTVERSORGUNGSANLAGE, PNEUMATISCHES SYSTEM UND VERFAHREN ZUM BETRIEB EINES VERDICHTERS**
COMPRESSOR FOR GENERATING COMPRESSED AIR, COMPRESSED AIR SUPPLY SYSTEM, PNEUMATIC SYSTEM, AND METHOD FOR OPERATING A COMPRESSOR
COMPRESSEUR POUR LA GÉNÉRATION D'AIR COMPRIMÉ, INSTALLATION D'ALIMENTATION EN AIR COMPRIMÉ, SYSTÈME PNEUMATIQUE ET PROCÉDÉ DE FONCTIONNEMENT D'UN COMPRESSEUR

(30) Priorität: 29.05.2015 DE 102015006711
(43) Veröffentlichungstag der Anmeldung: 11.04.2018
(73) Patentinhaber: ZF CV Systems Hannover GmbH, 30453 Hannover (DE)
(72) Erfinder: ABDELFATTAH, Mohamed, 38118 Braunschweig (DE); BLEIL, Reiner, 31228 Peine (DE); SOHN, Robert, 30559 Hannover (DE)
(74) Vertreter: Rabe, Dirk-Heinrich
(86) Internationale Anmeldenummer: PCT/EP2016/000824
(87) Internationale Veröffentlichungsnummer: WO 2016/192837

(56) Entgegenhaltungen:
- EP-A2- 1 000 796
- WO-A2-2014/090355
- US-A1- 2007 137 626
- Mihai Albu: "One and Two Quadrant Choppers", , 3. Februar 2014 (2014-02-03), XP002760195, Gefunden im Internet: URL:http://www.euedia.tuiasi.ro/lab_ep/ep_ files/Lab_no_18_c1.pdf [gefunden am 2016-07-22]

## Beschreibung

Die Erfindung betrifft einen Verdichter nach Anspruch 1. Die Erfindung betrifft weiter eine Druckluftversorgungsanlage und ein pneumatisches System sowie ein Verfahren zum Betrieb eines Verdichters nach Anspruch 23.

Ein Verdichter der eingangs genannten Art hat sich für eine Vielzahl von Anwendungen bewährt, insbesondere jedoch zur Erzeugung von Druckluft für eine Druckluftversorgungsanlage eines Fahrzeugs. Dabei weist ein Verdichter einen Elektromotor in Form eines bürstenbehafteten Gleichstrom-Elektromotors und einen Kompressor auf, der über den Elektromotor antreibbar ist. Der hier so bezeichnete bürstenbehaftete Gleichstrom-Elektromotor (BDC-Motor) hat sich aus verschiedensten Gründen gegenüber einem bürstenlosen Gleichstrommotor (BLDC-Motor) bewährt, insbesondere bei der vorgenannten Anwendung einer Druckluftversorgungsanlage eines Fahrzeugs.

Ein BLDC-Motor ist eine Bauform eines Gleichstrommotors, bei welcher der bei bürstenbehafteten Gleichstrom-Elektromotoren vorgesehene mechanische Kommutator mit Bürsten zur Stromwendung durch eine elektrische Schaltung ersetzt ist. BLDC-Motoren eignen sich zum Antrieb von vergleichsweise geringlastig ausgelegten Maschinen, wie Ventilatoren, Antrieben in Diskettenlaufwerken, Kompressoren, Videorecordern oder Modellflugzeugen und dergleichen, haben jedoch diverse Nachteile bei automotiven Anwendungen mit höheren Lastanforderungen; insbesondere erweist sich ein bürstenbehafteter Gleichstrommotor grundsätzlich als die günstigere Variante, jedenfalls bei Anwendungen mit höheren Anforderungen hinsichtlich Verlässlichkeit und Lastverträglichkeit.
Andererseits hat ein üblicherweise über ein Kompressor-Relais angesteuerter und mittels Gleichstrom-Bürstenmotor angetriebener Kompressor durch seine hohe Leistungsaufnahme diverse Nachteile beim Einschalten und beim Ausschalten, ggf. auch beim Betrieb unter unterschiedlichen Lastbedingungen.

Um solche Nachteile jedenfalls ansatzweise zu beheben, ist beispielsweise in WO 2010/045993 ein Elektromotor zum Antrieb eines Kompressors einer Luftversorgungseinheit eines Fahrzeugs vorgesehen, wobei der Elektromotor zumindest einen Halbleiterschalter zur Ansteuerung des Elektromotors aufweist. Der Halbleiterschalter und somit der Elektromotor wird von einem Steuereinrichtung mit einer pulsweiten-modulierten Spannung angesteuert. Über das PulsPausen-Verhältnis dieser Spannung kann die Drehzahl des Elektromotors gesteuert werden. Hierdurch ist zum Beispiel ein Sanft-Anlauf des Elektromotors möglich. Ein Sensorausgang des Halbleiterschalters ist über eine Messleitung mit einer Steuereinrichtung verbunden. Der Sensorausgang dient zur Ausgabe eines Stromsignals, welches proportional zu dem durch den Halbleiterschalter und somit durch den Elektromotor fließenden Stroms ist. Anhand des Stromsignals wird in der Steuereinrichtung die Drehzahl des Elektromotors und der von dem Kompressor erzeugte Druck ermittelt. In dem Fall ist ein Halbleiterschalter in einer Bürstenbrücke des Elektromotors integriert.

Eine solche Lösung erweist sich grundsätzlich bereits jedenfalls als vorteilhaft gegenüber üblicherweise auf Thyristoren beruhenden Sanft-Anlaufschaltungen, auch wenn diese vergleichsweise aufwändig, beispielsweise mit einem Zeitglied auf Basis eines Steuertransistors, ausgebildet sind, wie in DE 2 758 309 C2 für einen Universalmotor offenbart.

Dennoch erweist sich der Betrieb eines Verdichters zur Erzeugung von Druckluft als noch verbesserbar, insbesondere hinsichtlich der Begrenzung eines Betriebsstroms des Elektromotors, insbesondere hinausgehend über die grundsätzlich positive Herangehensweise der WO 2010/045993 A1.

Ein verbessertes Konzept zum Betrieb eines Elektromotors in Form eines bürstenbehafteten Gleichstrom-Elektromotors für einen Verdichter zur Erzeugung von Druckluft ist in DE 10 2012 024 400 A1 beschrieben. Der Elektromotor wird mittels einem elektronischen Steuermodul einer Steuereinrichtung zur Begrenzung eines Betriebsstroms des Elektromotors gesteuert, wobei das elektronische Steuermodul einen Steuerbaustein und ein ausführbares Programmmodul aufweist und ausgebildet ist, einen den Betriebsstrom begrenzenden Schwellstrom zeitlich variabel vorzugeben.

Die WO2014090355A2 offenbart einen Verdichter zur Erzeugung von Druckluft, insbesondere für eine Druckluftversorgungsanlage eines Fahrzeugs, mit einem Elektromotor in Form eines bürstenbehafteten Gleichstrom- Elektromotors BDC Elektromotor und mit einem Kompressor, insbesondere einem zweistufigen Kompressor mit wenigstens einer ersten und einer zweiten Verdichterstufe, der über den Elektromotor antreibbar ist, wobei der Elektromotor mittels einem elektronischen Steuermodul einer Steuereinrichtung unter Begrenzung eines Betriebsstroms IB des Elektromotors steuerbar ist.

Die Veröffentlichung Lab n.18 von Ph.D.eng. Mihai Albu mit dem Titel "One and Two Quadrant Choppers" offenbart eine Zweiquadranten-Schaltsteuerung für einen Elektromotor mit einem Freilaufzweig bei dem die Freilaufdiode parallel zu einem Transistor und einem Elektromotor angeordnet ist, um den Betriebsstrom des Elektromotors zu begrenzen (Quelle: http://www.euedia.tuiasi.ro/lab_ep/ep_files/Lab_no_18_c1.pdf).

Grundsätzlich ist die Vorgabe eines Schwellstroms in Kombination mit einem Zu- oder Abschalten des Elektromotors die zu bevorzugende Art einer betriebsmäßigen Steuerung des bürstenbehafteten Gleichstrom-Elektromotors. Grundsätzlich lassen sich die Rampen des Elektromotors über eine entsprechende PWM Kennlinie variabel oder fest vorgeben.

Es zeigt sich darüber hinaus jedoch, dass eine solche Vorgehensweise abhängig von den Umgebungsbedingungen die Dynamik der Kompressor-Charakteristiken einschränken kann. Darüber hinaus zeigt sich, dass diese an sich vorteilhafte Vorgehensweise gleichwohl in nicht abänderlicher Weise zu einer Leistungsdissipation in der Ansteuerschaltung oder dergleichen Steuereinrichtung --insbesondere in einem Strombegrenzer-Element, insbesondere in einem Freilaufpfad-- führt, die durch die feste oder dynamische Steuerung der Betriebsrampen der Schwellströme festgelegt ist.

Wünschenswert ist es, bei einem Verdichter der eingangs genannten Art, die genannten Betriebsnachteile zu vermeiden. Insbesondere ist es wünschenswert, die Dynamikbeschränkungen des Verdichters möglichst gering zu halten und gleichwohl eine Energiedissipation in der Ansteuerschaltung oder dergleichen Steuereinrichtung --insbesondere in einem Strombegrenzer-Element, insbesondere in einem Freilaufpfad-- durch die An- und Abschaltcharakteristik gering zu halten. Wünschenswert ist es auch an sich, den Verdichter hinsichtlich seiner Regelung vergleichsweise einfach und damit kostengünstig zu gestalten.

An dieser Stelle setzt die Erfindung an, deren Aufgabe es ist, eine Vorrichtung und ein Verfahren anzugeben --insbesondere zur Druckluftversorgung eines Fahrzeugs ausgelegt-- bei welcher die mittels einer elektronischen Steuereinrichtung zur Begrenzung eines Betriebsstroms des Elektromotors vorgesehene Steuerung verbessert ist. Insbesondere soll die Steuerung allgemein zur Verbesserung der Betriebsweise eines Verdichters ausgelegt sein, vorzugsweise zur Realisierung eines Sanft-Anlaufs, eines Ausschaltbetriebs und/oder eines Normalbetriebs. Vorzugsweise soll, insbesondere bei einem Normalbetrieb, eine Drehzahlregelung des Kompressors möglich sein.

Die Aufgabe betreffend die Vorrichtung wird durch die Erfindung mit einem Verdichter des Anspruchs 1 gelöst.

Der Verdichter der eingangs genannten Art weist zur Erzeugung von Druckluft, insbesondere für eine Druckluftversorgungsanlage eines Fahrzeugs, auf:
- einen Elektromotor in Form eines bürstenbehafteten Gleichstrom-Elektromotors (BDC Elektromotor)
- einen Kompressor, der über den Elektromotor antreibbar ist, wobei
- dem Elektromotor eine Steuereinrichtung zur Steuerung des Elektromotors zur Begrenzung eines Betriebsstroms des Elektromotors zugeordnet ist.

Die Erfindung geht von der Überlegung aus, dass grundsätzlich vorteilhaft der Elektromotor mittels einer Steuereinrichtung zur Begrenzung eines Betriebsstroms des Elektromotors gesteuert werden sollte.

Dabei geht das Konzept der Erfindung davon aus, dass der Elektromotor in Form eines bürstenbehafteten Gleichstrom-Elektromotors grundsätzlich zu bevorzugen ist. Dies erweist sich insbesondere als vorteilhaft für eine Druckluftversorgungsanlage eines Fahrzeugs; nämlich insbesondere bei der Verwendung des Verdichters zur Erzeugung von Druckluft in einer Druckluftzuführung der Druckluftversorgungsanlage. Damit geht das Konzept der Erfindung in grundsätzlich überlegener Weise von dem Betrieb eines bürstenbehafteten Gleichstrom-Elektromotors (BDC-Motor) aus, jedoch unter Vermeidung der mit einem Relais-Betrieb verknüpften Nachteile, wie sie beispielweise in WO 2010/045993 A1 beschrieben sind.

Erfindungsgemäß sind weiter die Merkmale des kennzeichnenden Teils des Anspruchs 1 vorgesehen ist, nämlich dass
- der Steuereinrichtung ein elektrisches Strombegrenzer-Element -- insbesondere in einem Freilaufpfad-- zugeordnet ist, das ausgebildet ist, den Betriebsstrom (IB) variabel zu begrenzen, wobei
- der Steuereinrichtung eine Schaltsteuerung zugeordnet ist, die ausgebildet ist, eine Einschaltzeitdauer (t_ON) und/oder eine Ausschaltzeitdauer (t_OFF) für den Elektromotor variabel vorzugeben. Insbesondere kann eine Ansteuerung erzeugt werden, die ähnlich einer PWM-Ansteuerung eine Einschaltzeitdauer (t_ON) und/oder eine Ausschaltzeitdauer (t_OFF) aufweist; aber eben anders als eine PWM-Ansteuerung die Einschaltzeitdauer (t_ON) und/oder eine Ausschaltzeitdauer (t_OFF) variabel vorgibt.

Dazu sei angemerkt, dass aus technischer Sicht zwar vor allem die Steuereinrichtung den Strom begrenzt; dennoch wird hier und im folgenden das Strombegrenzer-Element, insbesondere in einem Freilaufpfad, als solches benannt.

Das Konzept der Erfindung führt auch auf eine Druckluftversorgungsanlage des Anspruchs 21 und ein pneumatisches System des Anspruchs 22.

Die Aufgabe hinsichtlich des Verfahrens wird durch die Erfindung mit einem Verfahren zum Betrieb eines Verdichters mit einem Elektromotor in Form eines bürstenbehafteten Gleichstrom-Elektromotors (BDC-Motor) gelöst gemäß den Merkmalen des Anspruchs 23.

Dem Elektromotor ist eine Steuereinrichtung zur Steuerung des Elektromotors zur Begrenzung eines Betriebsstroms des Elektromotors zugeordnet. Anders ausgedrückt wird für den zeitlich transienten Betrieb des bürstenbehafteten Gleichstrom-Elektromotors z. B. nicht lediglich eine zeitunabhängige Betriebsstrombegrenzung vorgesehen.

Erfindungsgemäß ist vorgesehen, dass
- der Steuereinrichtung ein elektrisches Strombegrenzer- Element, insbesondere in einem Freilaufpfad--, zugeordnet ist, mitttels der oder dem ein Betriebsstrom (IB) variabel begrenzt wird, wobei
- der Steuereinrichtung (900, 900') eine Schaltsteuerung (901) zugeordnet ist, mittels der oder denen eine Einschaltzeitdauer (t_ON) und/oder eine Ausschaltzeitdauer (t_OFF) für den Elektromotor (500) variabel vorgegeben wird. Dies wird bevorzugt für ein Ein- und/oder Ausschaltrampe angewendet.

Die Erfindung hat erkannt, dass sich mit einem elektrischen Strombegrenzer-Element --insbesondere in einem Freilaufpfad-- die Amplituden und Rampen eines Betriebsstroms oder einer Betriebsspannung des Elektromotors für das Steuerelement begrenzen lassen. Das Strombegrenzerelement ist vorteilhaft, um eine Überlastung bzw. Zerstörung der Steuereinrichtung zu verhindern. Es zeigt sich, dass insbesondere eine Abschaltenergie zu hoch sein könnte, wenn ein Strombegrenzer- Element, insbesondere eine Freilaufschaltung, insbesondere in einem Freilaufpfad, nicht vorhanden wäre. Die Erfindung sorgt vorteilhaft ferner dafür, dass die Zeitdauer des Freilaufstroms (t_OFF) so eingestellt werden kann, dass die zu absorbierende Energie im elektrischen Strombegrenzer- Element --insbesondere in einem Freilaufpfad-- insbesondere in einer Freilaufschaltung, reduziert wird, damit eine Zerstörung des Bauteils verhindert wird. Grundsätzlich kann dieses zusätzlich, oder ggf. auch alternativ, zu einer von einem elektronischen Steuermodul vorgegebenen Begrenzung eines Betriebsstroms erfolgen.

Einer Steuereinrichtung gemäß dem Konzept der Erfindung ist damit eine Schaltsteuerung zugeordnet, mittels der eine Einschaltzeitdauer variabel vorgegeben werden kann. Die Steuereinrichtung kann mittels der Einschaltzeitdauer in vorteilhafter Weise den Betriebsstrom hinsichtlich Amplitude und/oder Rampe insbesondere beim Anfahren des Elektromotors variabel vorgeben.

Des Weiteren hat die Erfindung erkannt, dass mit der zusätzlich oder alternativ vorgegebenen Ausschaltzeitdauer die Energiedissipation über das Strombegrenzer- Element --insbesondere in einem Freilaufpfad-- vorteilhaft gering gehalten werden kann. Damit wird die Dynamik des Elektromotors zum Betrieb des Verdichters vergleichsweise wenig durch die Steuereinrichtung eingeschränkt und zum anderen die Energiedissipation gering gehalten.

Insgesamt führt das Konzept der Erfindung in der Kombination der Steuereinrichtung und der Schaltsteuerung zu einer Auflösung des Konflikts von an sich gegenläufigen Interessen; nämlich einerseits die Betriebsströme und deren Rampen insbesondere dem Anfahrverhalten gering zu halten und andererseits vergleichsweise günstige Komponenten zur Verfügung zu stellen, die dennoch nicht mit zu hoher Energiedissipation zu belasten sind, oder zu überlasten sind. Das Konzept der Erfindung sieht mit den vorgegebenen Ausschaltzeitdauern eine gesteuerte und damit konsolidierte Belastung der Strombegrenzer- Elemente --insbesondere in einem Freilaufpfad-- vor.

Insgesamt verlässt sich das Konzept der Erfindung damit auf die ziel- und sachgerechte Auslegung oder Regelung der Einschalt- und Ausschaltzeitdauern. Durch zu starre PWM-regulierte Betriebsstromsteuerungen hervorgerufene übermäßige Energiedissipation und Dynamikeinschränkung der Verdichter wird somit entgegengewirkt. Die Auslegung des oder der Strombegrenzer-Elemente --insbesondere in einem Freilaufpfad-- kann unter Vermeidung einer Überdimensionierung sachgerecht erfolgen im Hinblick auf die speziellen Anwendung.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Es sieht nun eine Weiterbildung des Konzepts vor, dass
- die Ausschaltzeitdauer (t_OFF) für den Elektromotor derart vorgegeben wird, dass eine Energiedissipation, insbesondere eine Wärmeaufnahme, des Strombegrenzer- Elements --insbesondere in einem Freilaufpfad-- hinreichend begrenzt wird.

Das elektrische Strombegrenzer- Element umfasst, vorteilhaft in einem separaten elektrischen Pfad, --insbesondere in einem Freilaufpfad-- vorzugsweise eine Freilauf-Diode (D) und einen Leistungs-Transistor (FET), insbesondere einen MOS-FET mit integrierter Freilaufdiode. Der Transistor erweist sich als besonders vorteilhaft, um im Verpolfall das Strombegrenzer-Element, insbesondere in einem Freilaufpfad, abzuschalten und somit die Diode zu schützen.

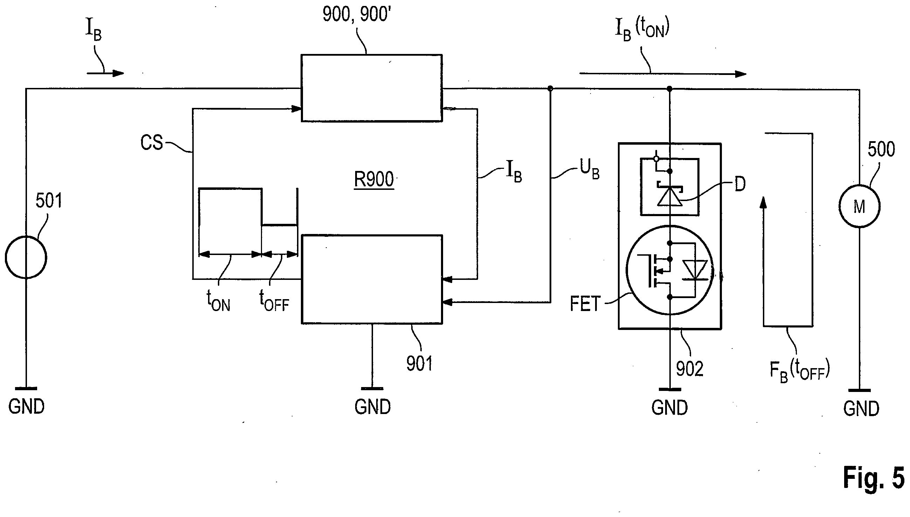

So hat es sich als vorteilhaft erwiesen, dass ein Strombegrenzer- Element -- insbesondere in einem Freilaufpfad-- im Wesentlichen einen Leistungstransistor und eine Freilaufdiode umfasst bzw. aus diesen besteht. Diese können beispielsweise als Leistungstransistor mit in Reihe geschalteter Freilaufdiode gebildet werden. Eine gegebenenfalls im Leistungstransistor zusätzlich parallel geschaltete Substratdiode, welche entgegen der Freilaufdiode ausgerichtet ist, lässt somit keine Abschaltung im Fall einer Verpolung zu. Diese können auch wie im Falle der Fig.5 gebildet werden. Im Falle eines Betriebsstroms von zu begrenzenden realistischen 100 Ampere eignet sich ein Leistungstransistor der bei 3 mΩ Widerstand liegt, um die Leistungsdissipation auf unter 100 Watt zu beschränken und andererseits, die Erwärmung der Komponenten unter 100°C zu halten für das Gesamtbauteil; der Leistungstransistor in Kombination mit der Freilaufdiode hat sich als vorteilhaft erwiesen, um diese gegen Umkehrspannung zu schützen.

So kann hinsichtlich der unten genannten Unterbrechung des Betriebs die Betriebsenergie variabel zu unterbrechen sein mittels der der Steuereinrichtung zugeordneten Schaltsteuerung gemäß der Einschaltzeitdauer (t_ON) und/oder der Ausschaltzeitdauer (t_OFF) für den Elektromotor.

Hinsichtlich des Verfahrens wird, vorteilhaft mittels der Schaltsteuerung, die Einschaltzeitdauer (t_ON) und/oder die Ausschaltzeitdauer (t_OFF) für den Elektromotor variabel und abhängig von einem Betriebsstrom und/oder einer Betriebsspannung für den Elektromotor (500) vorgegeben.

Dazu kann vorteilhaft betreffend den Verdichter die Steuereinrichtung und die Schaltsteuerung im Rahmen eines Regel- und/oder Steuerkreises gekoppelt sein.

Vorzugsweise ist der Regel- und/oder Steuerkreis aus der Steuereinrichtung und der Schaltsteuerung
- zur Aufnahme eines Betriebsstroms und/oder einer Betriebsspannung für den Elektromotor, in der Schaltsteuerung, insbesondere von der Steuereinrichtung und/oder dem Elektromotor, und
- zur Ausgabe der Einschaltzeitdauer (t_ON) und/oder der Ausschaltzeitdauer (t_OFF), vorzugsweise mittels einem Kontrollsignal, von der Schaltsteuerung, insbesondere an die Steuereinrichtung und/oder den Elektromotor, ausgebildet.

Bevorzugt wird, vorzugsweise mittels der Schaltsteuerung, die Einschaltzeitdauer (t_ON) und/oder die Ausschaltzeitdauer (t_OFF) abhängig von einem Betriebsstrom und/oder einer Betriebsspannung für den Elektromotor,
- direkt dem Elektromotor variabel vorgegeben, und/oder
- zunächst der Steuereinrichtung variabel vorgegeben, vorzugsweise über die Steuereinrichtung modifiziert, insbesondere dem Elektromotor vorgegeben werden.

Dazu kann vorteilhaft betreffend den Verdichter das elektrische Strombegrenzer- Element --insbesondere in einem Freilaufpfad-- parallel geschaltet sein zum Elektromotor,
- unter Abgabe eines IST-Wertes des Betriebsstroms und/oder einer Betriebsspannung zur Steuereinrichtung und/oder zu der Schaltsteuerung und/oder
- unter Aufnahme eines Betriebsstroms und/oder einer Betriebsspannung gemäß einem SOLL-Wertes der Steuereinrichtung gemäß einem Kontrollsignal Schaltsteuerung an die Steuereinrichtung und/oder den Elektromotor (500).

Vorzugsweise kann die Schaltsteuerung ausgebildet sein, die Einschaltzeitdauer (t_ON) und/oder die Ausschaltzeitdauer (t_OFF)
- variabel aber fest, oder
- dynamisch veränderbar variabel vorzugeben.

Insbesondere kann, vorzugsweise mittels der Schaltsteuerung.
- die Ausschaltzeitdauer (t_OFF) variabel aber fest mit abfallenden Werten vorgegeben werden, nämlich mit zunehmender Betriebszeit des Elektromotors und/oder für steigenden Betriebsstrom/Betriebsspannung für den Elektromotor, und/oder
- die Einschaltzeitdauer (t_ON) variabel aber fest mit ansteigenden Werten vorgegeben werden, nämlich mit zunehmender Betriebszeit des Elektromotors und/oder für fallende Werte von Betriebsstrom und/oder Betriebsspannung für den Elektromotor (500), vorzugsweise unmittelbar nach dem Betriebsstart das Elektromotors (500) .

Generell hat es sich als vorteilhaft erwiesen, dass die Schaltsteuerung (901) ausgebildet ist,
- den Betriebsstrom für den Elektromotor (500) auf einem Wert unter einem maximalen Start-Strom von l_max =30A zu halten und/oder
- einen Gradienten des Betriebsstroms für den Elektromotor (500) auf einem Wert unter einem Maximalen Limit-Gradienten des Stroms von G_max =300A/s zu halten.

Generell hat es sich auch als vorteilhaft erwiesen, dass die Schaltsteuerung ausgebildet ist,
- einen relativen Temperaturanstieg in dem elektrischen Strombegrenzer- Element --insbesondere in einem Freilaufpfad-- auf einem Wert unter 40°C, insbesondere auf unter 35°C, insbesondere auf unter 20°C zu halten, und/oder
- eine absolute Temperatur auf einen Wert unter 140°C, insbesondere auf unter 130°C, und/oder eine Junction-Temperatur im Strombegrenzer- Element -- insbesondere in einem Freilaufpfad-- auf unter 180°C, insbesondere auf unter 170°C zu halten.

Generell hat es sich als vorteilhaft erwiesen, dass die Schaltsteuerung ausgebildet ist, die Einschaltzeitdauer (t_ON) und/oder die Ausschaltzeitdauer (t_OFF) auf unter 1000 µs, insbesondere auf unter 800 µs, unter 600 µs, unter 400 µs und/oder unter 200 µs zu halten.

Insbesondere wird gemäß einer Weiterbildung die Einschaltzeitdauer (t_ON) für den Elektromotor derart vorgegeben, dass der Betriebsstrom begrenzt wird.

Darüber hinaus hat die vorliegende Erfindung erkannt, dass das elektronische Steuermodul --da insbesondere für einen Sanft-Anlauf geeignet auch als CSS-Steuerung (CSS, Compressor -Soft-Start) bezeichnet-- noch verbessert werden kann. Vorzugsweise kann das elektronische Steuermodul (CSS-Steuermodul) einen Steuerbaustein, wie einen Mikrocontroller oder dergleichen mit Logik versehenen Baustein,und ein ausführbares Programmmodul aufweisen.

Vorteilhaft weist die Steuereinrichtung ein elektronisches Steuermodul auf, wobei mittels des elektronischen Steuermoduls (910) der Steuereinrichtung der Elektromotor zur Begrenzung eines Betriebsstroms (IB) des Elektromotors steuerbar ist, wobei - das elektronische Steuermodul einen Steuerbaustein und ein ausführbares Programmmodul aufweist, wobei das elektronische Steuermodul damit ausgebildet ist, den Betriebsstrom zeitlich variabel zu begrenzen.

So kann das elektronische Steuermodul beispielsweise ausgebildet sein, einen den Betriebsstrom begrenzenden Schwellstrom (IS) zeitlich variabel vorzugeben.

Damit kann vorteilhaft eine Betriebsstrombegrenzung als Funktion der Zeit in veränderlicher Weise vorgegeben werden, insbesondere kann wenigstens ein erster und ein zweiter voneinander unterschiedlicher Schwellstrom vorgegeben werden. Darauf aufbauend ermöglicht das Konzept der Erfindung nicht nur die Vorgabe eines maximalen Schwellstroms, sondern darüber hinaus auch --über die zeitlich variable Vorgabe von den Betriebsstrom begrenzenden Schwellströmen-- die Vorgabe eines Gradienten für den Betriebsstrom.

Das auf einem bürstenbehafteten Gleichstrom-Elektromotor (BDC-Motor) aufbauende Konzept dieser Weiterbildung der Erfindung ermöglicht es, unter Beibehaltung der Überlegenheit und der Vorteile des bürstenbehafteten Gleichstrom-Elektromotors (BDC-Motor), diesen in verbesserter Weise hinsichtlich des Betriebsstroms zu begrenzen. Auf Basis des Konzepts der Erfindung ist nicht nur eine Absolut-, sondern auch eine Gradientenbegrenzung des Betriebsstroms vorteilhaft möglich.

Betreffend des elektronischen Steuermoduls wird ausdrücklich auf DE 102012 024 400 A1 verwiesen, deren Inhalt hiermit vollständig durch Zitat in die vorliegenden Anmeldeunterlagen aufgenommen wird.

Eine besonders bevorzugte Weiterbildung der Erfindung führt auf eine Ausführungsform die anhand der Zeichnung beschrieben ist. Diese sieht vor, dass dem Konzept folgend ein Kompressor-Relais durch einen mittels Mikrocontroller angesteuerten Halbleiterschalter ersetzt ist. Über ein im Mikrocontroller hinterlegtes Programmmodul wird bei einer Einschaltanforderung des Kompressors die zulässige Stromaufnahme des Kompressors begrenzt. Der zulässige Strom bei Einschaltanforderung kann zeitlich derart verändert werden, dass sowohl der Anlaufstrom-Peak wie auch der Anlaufstrom-Gradient (dl/dt) beeinflusst wird. Dies geschieht durch eine schnelle Ansteuerung des Halbleiterschalters.

Über ein im Mikrocontroller hinterlegtes Programmmodul kann auch bei einer Ausschaltanforderung des Kompressors der zulässige Ausschalt-Stromgradient des Kompressors begrenzt werden. Auch dies kann durch eine schnelle Ansteuerung des Halbleiterschalters umgesetzt werden.

Über ein im Mikrocontroller hinterlegtes Programmmodul kann auch nach Ende des Einschaltvorganges (also bei laufendem Kompressor) durch eine PWM-Ansteuerung mit variablem Puls-Pausenverhältnis oder mit variabler Frequenz die Stromaufnahme des Kompressors derart geregelt werden, dass sich die lastabhängigen, insbesondere druckabhängigen, Drehzahländerungen minimieren lassen.

Auf der Grundlage des Konzepts lässt sich ein Steuermodul ausbilden, einen den Betriebsstrom begrenzenden Schwellstrom zeitlich variabel vorzugeben. Im Rahmen einer besonders bevorzugten Weiterbildung ist das Programmmodul ausgebildet zur Begrenzung des Betriebsstroms wenigstens eine Schwellstrom-Grenzfunktion des Schwellstroms als Funktion der Zeit vorzugeben. Dadurch ist es besonders gut möglich, den Betriebsstrom zielgenau unterhalb einer Enveloppe zu halten; vorteilhaft wird die Enveloppe im Wesentlichen durch die Schwellstrom-Grenzfunktion vorgegeben. Die Weiterbildung hat erkannt, dass sich dadurch generell der Betrieb des Elektromotors, insbesondere zur Begrenzung einer Betriebsenergieversorgung wie einem Betriebsstrom und/oder einer Betriebsspannung, in weiter verbesserter Weise erreichen lässt.

Insbesondere ist in einer Weiterbildung vorgesehen, dass der Steuerbaustein ausgebildet ist, den Betrieb --insbesondere die Betriebsenergieversorgung, d. h. insbesondere einen Betriebsstrom und/oder eine Betriebsspannung-- des Elektromotors zu unterbrechen, insbesondere wiederholt kurzzeitig zu unterbrechen. Dazu kann besonders bevorzugt eine Betriebsspannung des Elektromotors unterbrochen werden. Eine Unterbrechung des Betriebs --insbesondere der Betriebsenergieversorgung, d. h. insbesondere eines Betriebsstroms und/oder einer Betriebsspannung-- erfolgt vorzugsweise für den Fall, dass der Betriebsstrom den Schwellstrom der wenigstens einen Schwellstrom-Grenzfunktion erreicht, insbesondere überschreitet oder unterschreitet. Beispielsweise kann ein zulässiger Betriebsstrom des Elektromotors zum Betrieb des Kompressors von einem Startwert bis zu einem Endwert gemäß einer vorgegebenen Funktion der Zeit erhöht werden oder erniedrigt werden.

Vorteilhaft kann auf Grundlage des Konzepts der Erfindung, ein Anlaufstrom-peak und/oder eine Phasenlänge eines zugeordneten Anlauf- und/oder Ausschaltzeitabschnitts und/oder ein Anlaufstromgradienten gezielt beeinflusst werden; zusätzlich oder alternativ gilt dies auch für einen Ausschaltstrompeak und einen Ausschaltstromgradienten. In einer Weiterbildung wird es vor allem möglich, dass eine Anlauffähigkeit und/oder Ausschaltlauffähigkeit des Kompressors trotz der Betriebsstrombegrenzung nicht bzw. nicht maßgeblich reduziert ist. Dies beruht wesentlich auf der Tatsache, dass ein den Betriebsstrom begrenzender Schwellstrom zeitlich variabel vorgegeben wird. Hinsichtlich eines verbesserten Ausschaltverhaltens wird vor allem ein akustisch unauffälliger Kompressorauslauf erreichbar.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnungen.

Im Einzelnen zeigt die Zeichnung in:

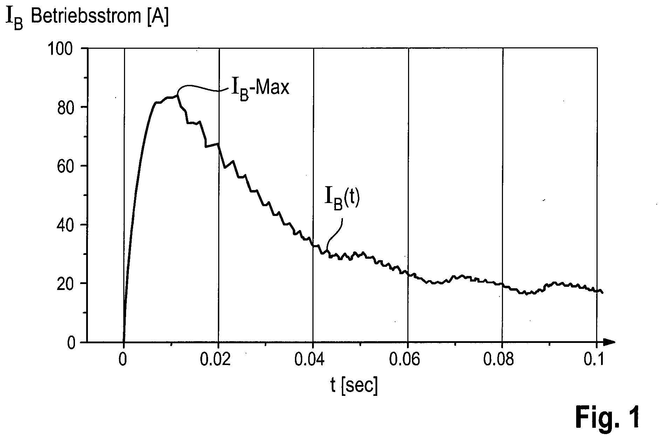

Fig. 1 einen beispielhaften Verlauf eines Anlaufstroms zur Verdeutlichung einer Anlaufstromcharakteristik ohne Strombegrenzung als Funktion der Zeit für einen Betriebsstrom eines Elektromotors, der in Form eines bürstenbehafteten Gleichstrom-Elektromotors gebildet ist, beim Betrieb eines Kompressors eines Verdichters zur Erzeugung von Druckluft für eine Druckluftversorgungsanlage eines Fahrzeugs;

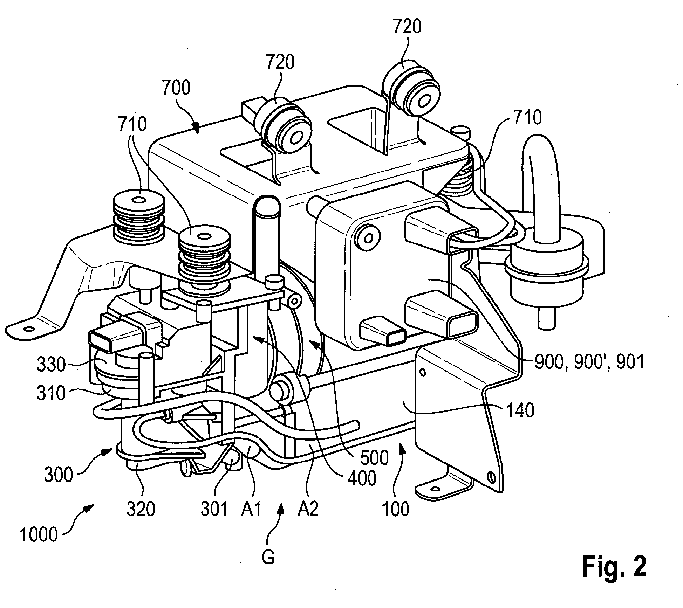

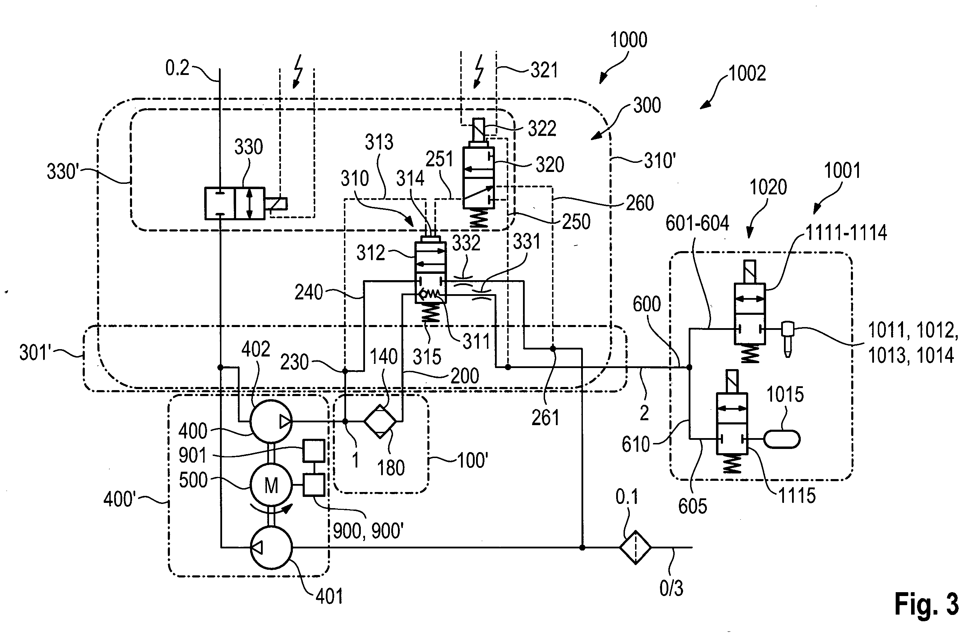

Fig. 2 eine perspektivische Darstellung einer besonders bevorzugten Bauform der Druckluftversorgungsanlage wie sie in Fig. 3 näher dargestellt ist;
Fig. 3 ein Schaltbild eines besonders bevorzugten pneumatischen Systems mit einer Druckluftversorgungsanlage, die eine Druckluftzuführung mit einem Verdichter zur Erzeugung von Druckluft mit einem Elektromotor in Form des bürstenbehafteten Gleichstrom-Elektromotors aufweist und die in dieser Ausführungsform weiter einen zweistufigen Kompressor aufweist;

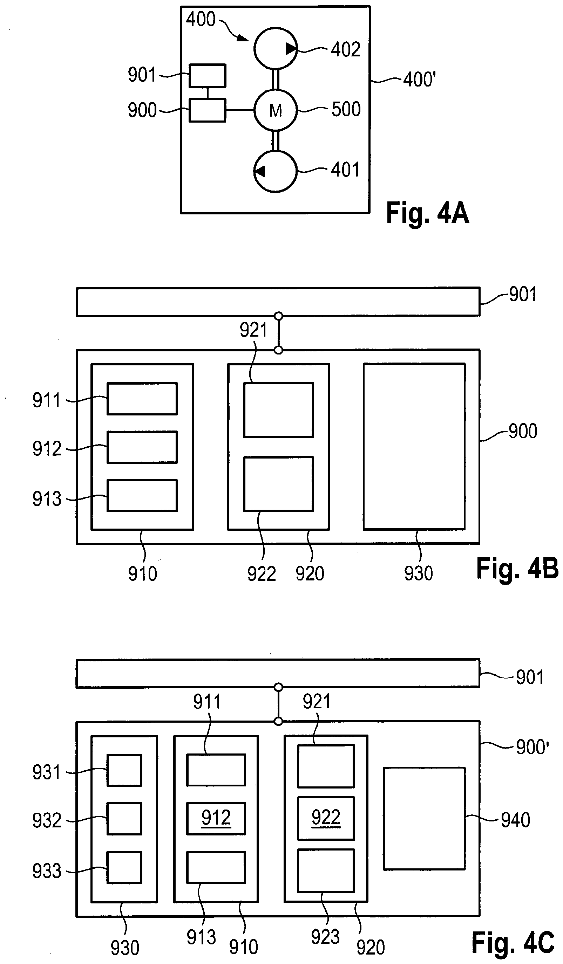

Fig. 4 in Ansicht (B) ein Systembild einer elektronischen Steuereinrichtung für einen in Ansicht (A) dargestellten Verdichter wie er für eine Druckluftversorgung der Druckluftversorgungsanlage der Fig. 2 vorgesehen ist, wobei die elektronische Steuereinrichtung unter anderem ein elektronisches Steuermodul und ein Regelmodul und eine Analyseeinheit aufweist und in Ansicht (C) ein detailliertes Systembild einer abgewandelten elektronischen Steuereinrichtung für einen in Ansicht (A) dargestellten Verdichter;
Fig. 5 ein Schaltschema für eine Steuereinrichtung 900, die mit einer Schaltsteuerung 901 im Rahmen eines Steuer- und Regelkreises gekoppelt ist und welche aufgrund der Steuereinrichtung 900 ausgebildet ist, grundsätzlich Amplituden und Rampen des Betriebsstroms für den Elektromotor variabel vorzugeben und zudem infolge der Schaltsteuerung 901 ausgebildet ist, einerseits diese Vorgabe abzusichern, in Kombination mit dem Freilaufpfad, und zum anderen die Energiedissipation in dem Freilaufpfad gering zu halten;

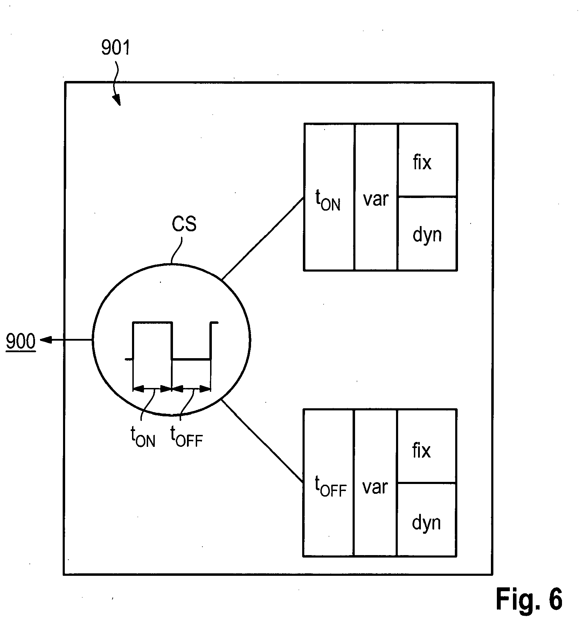

Fig. 6 ein grundsätzliches Funktionsschema der Schaltsteuerung 901 zur Vorgabe einer Einschaltdauer t_ON und/oder einer Ausschaltzeitdauer t_OFF für den Elektromotor im Rahmen des Regel- und Schaltkreises mit der Steuereinrichtung 900, wie dies in Fig. 5 gezeigt ist;

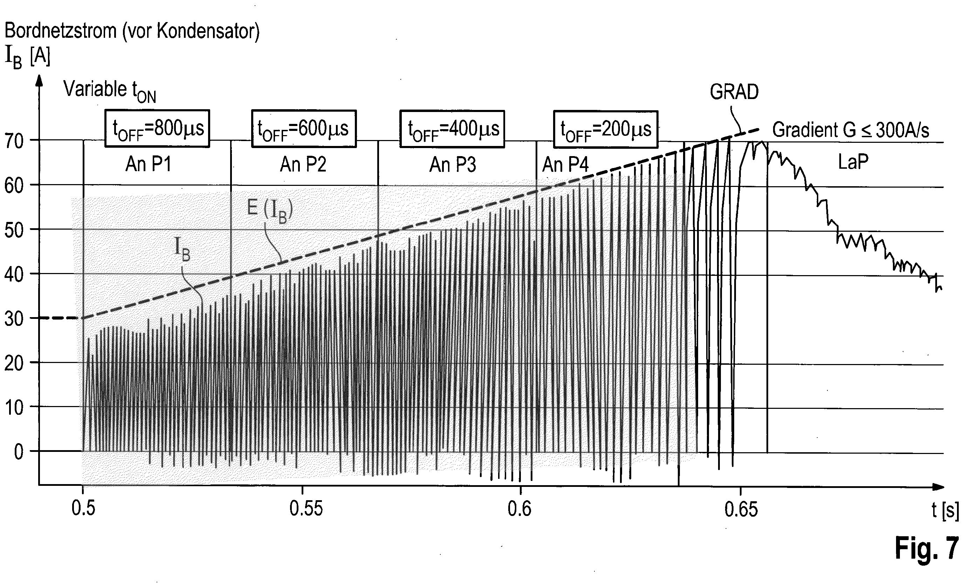

Fig. 7 ein Beispiel eines Kompressorstarts mit einer durch die Steuereinrichtung vorgegebenen Stromrampe, welche mittels einer variablen PWM-Steuerung erreicht wird, die für vier Zeitabschnitte ausgelegt ist, wobei jedoch zusätzlich die erfindungsgemäße Kopplung der Steuereinrichtung mit der Schaltsteuerung 901 im Rahmen eines Steuer- und Regelkreises die Ein- und vor allem Ausschaltzeitdauern variabel vorgibt, um zudem die Energiedissipation in dem Freilaufpfad möglichst gering zu halten - im Ergebnis wird die Ausschaltzeitdauer bei steigendem Betriebsstrom verkürzt im Rahmen der Anlauframpe des Elektromotors;

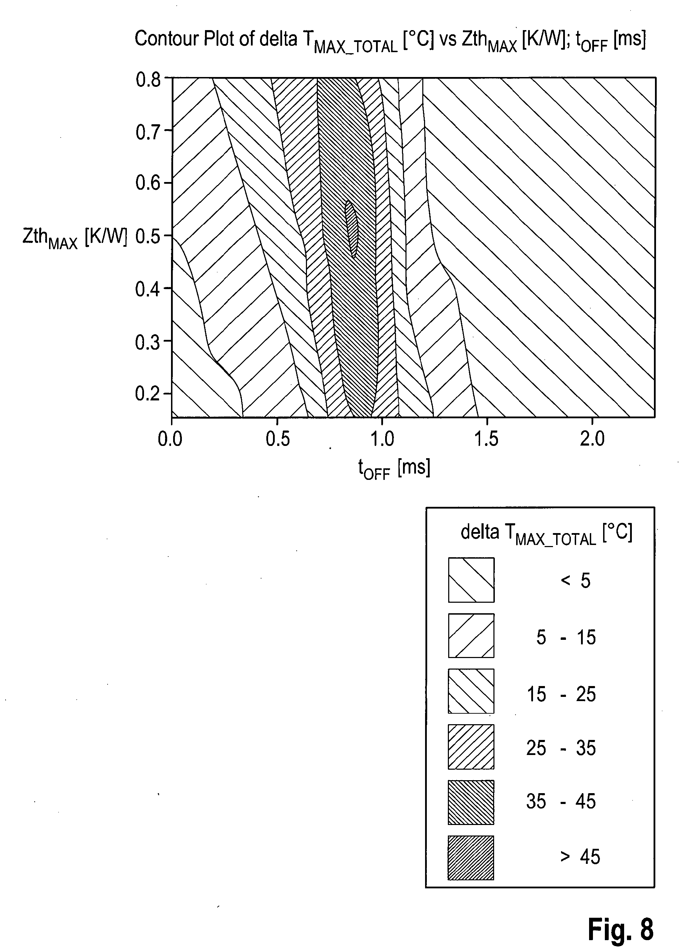

Fig. 8 ein simuliertes zweidimensionales Schaubild betreffend den Temperaturanstieg im Freilaufpfad in Abhängigkeit der erfindungsgemäßen Ausschaltzeitdauern während einer Ausschaltphase (*ramp down*) für einen Elektromotor

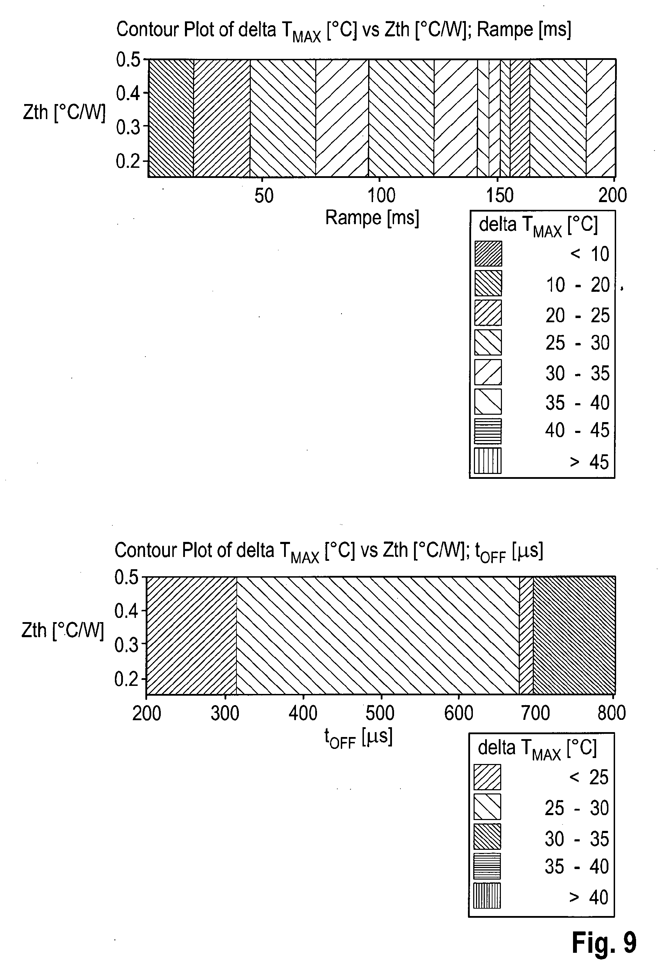

Fig. 9 ein analoges Schaubild eines Temperaturanstiegs als Funktion der Ausschaltzeitdauer während einer Anlaufphase des Elektromotors (*ramp up* Phase).

Fig. 1 zeigt mit Bezug auf die Einleitung eine charakteristische Anlaufstromcharakteristik ohne Strombegrenzung mit vergleichsweise hohem Strompegel IB-Max bei etwa 80 Ampere, die sich gegebenenfalls nachteilig auf das Luftversorgungssystem, insbesondere auf andere Komponenten einer Druckluftzuführung, oder allgemein auf andere Fahrzeugsysteme auswirken können. Ein üblicherweise über ein Kompressor-Relais angesteuerter und mittels Gleichstrom-Bürstenmotor angetriebener Kompressor kann durch seine Leistungsaufnahme diverse Nachteile beim Einschalten und beim Ausschalten, ggf. auch beim Betrieb unter unterschiedlichen Lastbedingungen haben.

Diese können sich u. a. auch auf das elektrische Bordnetz des Fahrzeugs und eine Sicherungsauslegung des Kompressor-Versorgungskreises auswirken. Sogar ein unzumutbarer Spannungsabfall über die Kompressor-Versorgungsleitungen im Anlaufmoment kann als Folge der Leistungsaufnahme auftreten und sich damit auf die Anlauffähigkeit des Kompressors auswirken. Eine beispielhafte Anlaufstromcharakteristik dazu ist in Fig. 1 der Zeichnung dargestellt. Elektrisch angetriebene Kompressoren für PKW-Luftfederungen beispielsweise haben in der Regel eine Leistungsaufnahme von 180 W bis 400 W bei einem Anlaufstrom mit einem Strompegel IB-Max von bis zu 120 A. Bei einem hohen Anlaufstrom, wie in Fig. 1 dargestellt, ergibt sich ein hoher Spannungsabfall, der die Startfähigkeit des Kompressors reduziert. Zur Kompensation müssen deswegen üblicherweise entsprechende Leistungsquerschnitte für die Kompressorversorgung vorgehalten werden. Zudem muss eine Sicherungsauslegung den Anlaufstrom des Kompressors ohne fehlerhaftes Auslösen ertragen können. Insbesondere aber ist im Hinblick auf Auswirkungen auf das elektrische Bordnetz des Fahrzeugs zu verstehen, dass bei einer geschwächten Starterbatterie der Generator den steilen Stromanstieg beim Einschalten des Kompressors mittels Relais üblicherweise nicht ausregeln kann. Dadurch kommt es zu kurzzeitiger Unterspannung im Fahrzeug, was wiederum zu Funktionsstörungen anderer Systeme führen kann. Hier hat es sich bereits als besonderes vorteilhaft erwiesen, eine Galerieentlüftung vor einer Kompressorabschaltung zur Betriebsstromreduzierung des Kompressors vorzunehmen.

Wird ein bürstenbehafteter Gleichstrom-Elektromotor zum Antrieb eines Kompressors über ein Relais dagegen ausgeschaltet, bewirkt eine schlagartige Reduzierung des Strombedarfs um beispielsweise ca. 25 bis 30 A bei geschwächter Batterie eine unerwünschte Beeinflussung des Bordnetzes, was sehr wahrscheinlich zu einer kurzfristigen Überspannung führen kann, die im schlimmsten Fall in der Tat zu Funktionsstörungen anderer Systeme führt.

Hinzu kommt, dass bei einem insbesondere zweistufigen Kompressor die Last-Drehzahl-Charakteristik desselben eine Abhängigkeit von Drehzahl und Kompressor-Gegendruck zeigt. Drehzahländerungen bei laufendem Kompressor können zu akustischen Auffälligkeiten führen. Insbesondere im Vergleich zu einem einstufigen Kompressor zeigt der zweistufige Kompressor --mit einer ersten und einer zweiten Verdichterstufe-- im relevanten Druckbereich eine noch deutlicher ausgeprägte Drehzahlabhängigkeit, die beispielhaft in Fig. 10 und Fig. 11 gezeigt ist. Diese ist bei einem einstufigen Kompressor zwar grundsätzlich auch vorhanden jedoch nicht so deutlich wie bei einem zweistufigen Kompressor; damit ergibt sich insbesondere bei einem zweistufigen Kompressor eine bevorzugte Anwendung einer Drehzahlregelung, die nachfolgend beschrieben ist.

Zur Lösung der vorerläuterten Auffälligkeiten bzw. Probleme wird der Kompressor über eine elektronische Steuereinrichtung 900 zur Umsetzung wenigstens eines Sanft-Anlaufs (CSS - Compressor Soft Start) aktiviert und deaktiviert. Eine solche Elektronik wird in unmittelbarer Nähe des Kompressors angebracht und ist in Fig. 2 beispielhaft zusammen mit einer Druckluftversorgungsanlage gezeigt. Zunächst bezugnehmend auf Fig. 2 zeigt diese perspektivisch in Ansicht (A) eine Druckluftversorgungsanlage 1000, die vorliegend zur Versorgung einer Pneumatikanlage 1001 in Form einer Luftfederanlage eines PKW-Fahrzeugs (nicht gezeigt) ausgelegt ist - die Pneumatikanlage 1001 (nicht gezeigt) ist weiter anhand eines Schaltschemas von Fig. 3 erläutert. Zunächst weiter bezugnehmend auf Fig. 2 --teilweise bereits Fig. 3-- weist die Druckluftversorgungsanlage 1000 einen Elektromotor 500 zum Antrieb eines Verdichters 400 auf, wobei der Verdichter 400 vorliegend als ein Doppelverdichter gebildet ist. Zu verdichtende Luft wird dem Verdichter 400 zugeführt und dann verdichtet einer Pneumatikhauptleitung 200 als Druckluft zugeführt. Ebenfalls angeschlossen an die Pneumatikhauptleitung 200 ist ein Lufttrockner 100 mit einem Trockenbehälter 140, der zur Trocknung der Druckluft in einem Trocknerbett dient, das direkt in Kammern des Trockenbehälters 140 gebildet ist.

Die Pneumatikhauptleitung 200 verbindet über eine weitere Pneumatikleitung 600 insgesamt eine Druckluftzuführung 1 von dem Verdichter 400 zu einem Druckluftanschluss 2 zu einer Galerie 610 der Pneumatikanlage 1001. In der Pneumatikhauptleitung 200 ist auch eine in Fig. 2 nach ihrem Gehäuse ersichtliche Ventilanordnung 300 pneumatisch angeschlossen. Die Ventilanordnung 300 weist vorliegend eine schaltbare Wegeventilanordnung 310 auf, die über ein Steuerventil 320 in Form eines Magnetventils schaltbar ist. Es ist auch ein Boostventil 330 in der Ventilanordnung 300 integriert. Das Boostventil 330 (hier ein 2/2 Boostventil) und das Steuerventil 320 in Form eines Magnetventils (hier ein 3/2 Magnet-Wegeventil) sind vorliegend als Doppelblock, d. h. als Doppelventil, gebildet. Das Doppelventil ist hier an der Wegeventilanordnung 310 in der Ventilanordnung 300 integriert.

Insgesamt ist die Druckluftversorgungsanlage 1000 mit einem Elektromotor 500 und einem zweistufigen Verdichter 400 gebildet, die in Baueinheit mit dem Lufttrockner 100 und der Ventilanordnung 300 sowie der Pneumatikhauptleitung 200 modular assemblierbar sind. Wie im Einzelnen aus Fig. 2 ersichtlich ist, wird eine Gehäuseanordnung G mit dem Elektromotor 500 und dem Verdichter 400 zur Verfügung gestellt, wobei der Verdichter 400 als zentraler Monoblock dient. Insbesondere ist vorliegend der Verdichter 400 in besonders vorteilhafter Weise als zweistufiger Verdichter ausgebildet. An diese Gehäuseanordnung G ist der Lufttrockner 100 und die Ventilanordnung 300 auf gegenüberliegenden Seiten anbringbar. Insbesondere ist der Lufttrockner 100 und die Ventilanordnung 300 auswechselbar an die Gehäuseanordnung G anbringbar. Die aus Fig. 2 erkennbare Gehäuseanordnung G ist zum einen mit dem Elektromotor 500, dem Verdichter 400 und dem Lufttrockner 100 in etwa U-förmig aufgebaut. Die Ventilanordnung 300 ist an der Basis der U-förmigen Anordnung angebracht. Die Gehäuseanordnung G weist eine der Ventilanordnung 300 zugewandte Anschlussebene A1 auf, an welche die Ventilanordnung 300 modular anbringbar ist. Die Gehäuseanordnung G weist eine der Lufttrockneranordnung 100 zugewandte Anschlussseite A2 auf, an welche die Lufttrockneranordnung 100 modular anbringbar ist. Die Anschlussebene A1 und die Anschlussseite A2 sind über einen Anschlussabstand voneinander beabstandet, wobei der Monoblock des Verdichters 400 größtenteils in dem Anschlussabstand untergebracht ist. Aufgrund der modularen Anordnung der vorgenannten Komponenten des Lufttrockners 100 und der Ventilanordnung 300 sind die Funktionalitäten der Trocknerfunktion einerseits und der Druckluftsteuerfunktion andererseits räumlich getrennt. Die Funktionalitäten lassen sich einzeln bedarfsgerecht auslegen und gegebenenfalls auswechseln und separat durch Auswechseln ändern.

Fig. 2 zeigt in einer beispielhaft aufgeführten konstruktiven Realisierung die Druckluftversorgungsanlage 1000 in einer Aufhängung 700, die auch als Klammer bezeichnet werden kann. Die Aufhängung 700 trägt die elektronische Steuereinrichtung 900, 900' die ausgebildet ist, für den Elektromotor 500 einen den Betriebsstrom IB begrenzenden Schwellstrom IS zeitlich variabel vorzugeben. Der Steuereinrichtung 900, 900' ist eine Schaltsteuerung 901 zugeordnet, die ausgebildet ist, eine Einschaltzeitdauer (t_ON) und/oder eine Ausschaltzeitdauer (t_OFF) für den Elektromotor (500) variabel vorzugeben. Im Übrigen weist die Aufhängung 700 ein System von Federlagerungen 710 zum Tragen der Druckluftversorgungsanlage 1000 auf sowie ebenfalls abgefederte Befestigungsanschlüsse 720 zur Anbringung der Aufhängung 700 an einem Bauteil eines Fahrzeugs.

Fig. 3 zeigt einen pneumatischen Schaltplan eines pneumatischen Druckluftversorgungssystems 1002 mit der Druckluftversorgungsanlage 1000 der vorbeschriebenen Art und einer Pneumatikanlage 1001 in Form einer Luftfederanlage. In dem Schaltplan der Druckluftversorgungsanlage 1000 ist auch der Verdichter 400' in einem Gehäusemodul --hier der genannten Aufhängung 700 als Teil der Gehäuseanordnung G-- mit dem Elektromotor 500, dem Kompressor 400 und der Steuereinrichtung 900-- gezeigt. Der Steuereinrichtung 900, 900' ist eine Schaltsteuerung 901 zugeordnet, die ausgebildet ist, eine Einschaltzeitdauer (t_ON) und/oder eine Ausschaltzeitdauer (t_OFF) für den Elektromotor (500) variabel vorzugeben. Außerdem ist das Trocknermodul 100' (des Lufttrockners 100), das Boostventilgehäusemodul 330' (mit dem Boostventil 330 und hier auch mit dem Ablassventil in Form des Steuerventils 320) und ein Luftverteilmodul 301' --z. B. in Form eines Flansches 301 an einem Ventilgehäusemodul 310' der Wegeventilanordnung 310, d. h. der über ein Steuerventil 320 in Form eines Magnetventils schaltbaren Wegeventilanordnung 310-- eingezeichnet. Die als Steuereinheit dienende Ventilanordnung 300 lässt sich vergleichsweise einfach über den genannten Flansch 301 an die anderen modularen Einheiten der Druckluftversorgungsanlage 1000 modular assemblierbar anbinden.

Die Druckluftversorgungsanlage 1000 dient zum Betreiben der Pneumatikanlage 1001. Die Druckluftversorgungsanlage 1000 weist dazu eine vorerwähnte Druckluftzuführung 1 und einen Druckluftanschluss 2 zur Pneumatikanlage 1001 auf. Die Druckluftzuführung 1 ist vorliegend mit einer Luftzuführung 0, einem der Luftzuführung 0 vorgeordneten Filterelement 0.1 und einem der Luftzuführung 0 nachgeordneten über den Elektromotor 500 angetriebenen Verdichter 400 --hier ein Doppelluftverdichter mit einer ersten Verdichterstufe 401 und einer zweiten Verdichterstufe 402-- sowie einem Anschluss der Druckluftzuführung 1 gebildet, an den sich in der Pneumatikhauptleitung 200 der Lufttrockner 100 mit dem Trockenbehälter 140 anschließt.

Es kann nur eine Kammer aber auch mehrere Kammern des Lufttrockners 100 vorgesehen sein; z. B. kann eine erste und zweite Kammer des Lufttrockners 100 zur Bildung einer ersten Lufttrocknerstufe und einer zweiten Lufttrocknerstufe in einer Reihenschaltung in der Pneumatikhauptleitung 200 vorgesehen sein. Vorliegend ist die Luftzuführung 0 und ein dieser vorgeordnetes Filterelement 0.1 mit einem Entlüftungsanschluss 3 zusammengelegt.

Gemäß der in Fig. 3 gezeigten Ausführungsform zweigt eine Zweigleitung 230 an der Druckluftzuführung 1 von der Pneumatikhauptleitung 200 ab und führt zu einer Entlüftungsleitung 240 zu einem Entlüftungsanschluss 3 und dem nachgeschalteten Filterelement 0.1. Die Pneumatikhauptleitung 200 ist die einzige pneumatische Leitung der ersten pneumatischen Verbindung, die sich bis zur Pneumatikanlage 1001 mit einer weiteren Pneumatikleitung 600 fortsetzt. Die Pneumatikhauptleitung 200 verbindet pneumatisch die Druckluftzuführung 1 und den Druckluftanschluss 2, wobei in der Pneumatikhauptleitung 200 der Lufttrockner 100 und weiter in Richtung des Druckluftanschlusses 2 ein entsperrbares Rückschlagventil 311 sowie eine erste Drossel 331 angeordnet ist. Zwischen dem pneumatisch entsperrbaren Rückschlagventil 311 und dem Druckluftanschluss 2 ist die erste Drossel 331 angeordnet. Als Teil der Wegeventilanordnung 310 ist --neben dem entsperrbaren Rückschlagventil 311-- ein steuerbares Entlüftungsventil 312 in Reihenschaltung mit einer zweiten Drossel 332 in der Entlüftungsleitung 240 angeordnet. Die Reihenanordnung aus erster Drossel 331 und pneumatisch entsperrbarem Rückschlagventil 311 ist zwischen dem Lufttrockner 100 und dem Druckluftanschluss 2 zur Pneumatikanlage 1001 in der Pneumatikhauptleitung 200 angeordnet. Die Nennweite der zweiten Drossel 332 liegt oberhalb der Nennweite der ersten Drossel 331.

Weiter weist die Druckluftversorgungsanlage 1000 die vorgenannte mit der Pneumatikhauptleitung 200 und dem Entlüftungsanschluss 3 und Filterelement 0.1 und/oder Schalldämpfer pneumatisch verbundene zweite pneumatische Verbindung auf --nämlich die vorerwähnte Entlüftungsleitung 240.

Das Entlüftungsventil 312 ist vorliegend als ein vom pneumatisch entsperrbaren Rückschlagventil 311 separates Wegeventil gebildet und in der durch die Entlüftungsleitung 240 gebildeten zweiten pneumatischen Verbindung angeordnet. Das steuerbare Entlüftungsventil 312 ist als indirekt geschaltetes Relaisventil Teil einer Ventilanordnung 300 mit einem vorerwähnten Steuerventil 320 in Form eines 3/2-Wege-Magnetventils. Das Steuerventil 320 kann mit einem über eine Steuerleitung 321 übermittelbaren Steuersignal in Form eines Spannungs- und/oder Stromsignals an die Spule 322 des Steuerventils 320 angesteuert werden. Bei Ansteuerung kann das Steuerventil 320 von der in Fig. 3 gezeigten stromlosen Stellung in eine pneumatisch geöffnete bestromte Stellung überführt werden; in dieser Stellung ist ein Steuerdruck über eine pneumatische Steuerleitung 250 aus der Pneumatikhauptleitung 200 zur pneumatischen Steuerung des steuerbaren Entlüftungsventils 312 als Relaisventil weitergegeben. In der stromlosen Stellung ist die Pneumaitkhauptleitung 200 mit dem entsperrbaren Rückschlagventil 311 geschlossen. Das steuerbare Entlüftungsventil 312 ist vorliegend zusätzlich mit einer Druckbegrenzung 313 versehen. Die Druckbegrenzung 313 greift über eine pneumatische Steuerleitung vor dem Entlüftungsventil 312 --konkret zwischen Zweigleitung 230 und Entlüftungsventil 312-- einen Druck ab, welcher bei Übersteigen eines Schwelldrucks den Kolben 314 des Entlüftungsventils 312 gegen die Kraft einer einstellbaren Feder 315 vom Ventilsitz abhebt --also das steuerbare Entlüftungsventil 312 auch ohne Ansteuerung über das Steuerventil 320 in die geöffnete Stellung bringt. Auf diese Weise wird vermieden, dass ein ungewollt zu hoher Druck im pneumatischen System 1000 entsteht.

Das Steuerventil 320 trennt im vorliegend geschlossenen Zustand die Steuerleitung 250 und ist über eine weitere Entlüftungsleitung 260 mit der Entlüftungsleitung 240 zum Entlüftungsanschluss 3 pneumatisch verbunden. Mit anderen Worten ist ein zwischen Wegeventilanordnung 310 --insbesondere Entlüftungsventil 312-- und Steuerventil 320 liegender Leitungsabschnitt 251 der Steuerleitung 250 bei der in Fig. 3 gezeigten geschlossenen Stellung des Steuerventils 320 mit der weiteren Entlüftungsleitung 260 zwischen Steuerventil 320 und Entlüftungsanschluss 3 verbunden. Die weitere Entlüftungsleitung 260 schließt dazu im weiteren Zweiganschluss 261 an die weitere Entlüftungsleitung 240 an. Die Zweigleitung 230 und die weitere Entlüftungsleitung 240 führt über den Zweiganschluss 261 zum Entlüftungsanschluss 3.

Über das Steuerventil 320 kann bei am Druckluftsanschluss 2 anstehenden Steuerdrucks --insbesondere eines von der Pneumatikhauptleitung 200 oder von der weiteren Pneumatikleitung 600 über die pneumatische Steuerleitung 250 abgeleiteten Steuerdrucks-- das Entlüftungsventil 312 unter Druckbeaufschlagung des Kolbens 314 geöffnet werden. Das Überführen des Steuerventils 320 in den geöffneten Zustand führt nicht nur zum Öffnen des Entlüftungsventils 312, sondern auch zum Entsperren des entsperrbaren Rückschlagventils 311. Mit anderen Worten dient das Steuerventil 320 der Magnetventilanordnung 300 zur Ansteuerung des separat vom Rückschlagventil 311 vorgesehenen Entlüftungsventils 312 als auch des Rückschlagventils 311. Dies führt zu einem beidseitigen pneumatischen Öffnen des Lufttrockners 100 bei Überführung des Steuerventils 320 in die geöffnete Stellung. Diese weitere durch die Druckluftversorgungsanlage 1000 einnehmbare Betriebsstellung kann im Betrieb zum Entlüften der Pneumatikanlage 1001 und gleichzeitig zum Regenerieren der Lufttrockner 100 genutzt werden. Die in Fig. 3 gezeigte Betriebsstellung der Druckluftversorgungsanlage 1000 dient unter Durchfluss des Rückschlagventils 311 in Durchlassrichtung vor allem zum Befüllen der Pneumatikanlage 1001 über die Pneumatikhauptleitung 200 sowie die weitere Pneumatikleitung 600.

Die Pneumatikanlage 1001 der Fig. 3 in Form einer Luftfederanlage weist in diesem Fall eine Anzahl von vier sogenannten Bälgen 1011, 1012, 1013, 1014 auf, die jeweils einem Rad eines nicht näher dargestellten PKW-Fahrzeugs zugeordnet sind und eine Luftfeder des Fahrzeugs bilden. Des Weiteren weist die Luftfederanlage einen Speicher 1015 zur Speicherung schnellverfügbarer Druckluft für die Bälge 1011, 1012, 1013, 1014 auf. Jenen Bälgen 1011 bis 1014 sind in jeweils einer von einer Galerie 610 abgehenden Federzweigleitung 601, 602, 603, 604 jeweils ein Magnetventil 1111, 1112, 1113, 1114 vorgeordnet, welches jeweils als Niveauregelventil zum Öffnen oder Schließen einer mit einem Balg 1011 bis 1014 gebildeten Luftfeder dient. Die Magnetventile 1111 bis 1114 in den Federzweigleitungen 601 bis 604 sind als 2/2-Wegeventile ausgebildet. Einem Speicher 1015 ist in einer Speicherzweigleitung 605 ein Magnetventil 1115 in Form eines weiteren 2/2-Wegeventils als Speicherventil vorgeordnet. Die Magnetventile 1011 bis 1014 sind mittels der Feder- und Speicherzweigleitungen 601 bis 604 bzw. 605 an eine gemeinsame Sammelleitung, nämlich die vorbezeichnete Galerie 610 und dann an die weitere Pneumatikleitung 600, angeschlossen. Die Galerie 610 ist so über die Pneumatikleitung 600 an den Druckluftanschluss 2 der Druckluftversorgungsanlage 1000 pneumatisch angeschlossen. Vorliegend sind die Magnetventile 1111 bis 1115 in einem Ventilblock 1010 mit fünf Ventilen angeordnet. Die Magnetventile sind in Fig. 2 in einem stromlosen Zustand gezeigt - dabei sind die Magnetventile 1111 bis 1115 als stromlos geschlossene Magnetventile gebildet. Andere, hier nicht gezeigte abgewandelte Ausführungsformen können eine andere Anordnung der Magnetventile realisieren - es können auch weniger Magnetventile im Rahmen des Ventilblocks 1010 genutzt werden.

Zum Befüllen der Pneumatikanlage 1001 werden die den Bälgen 1011 bis 1014 vorgeordneten Magnetventile 1111 bis 1114 und/oder das dem Speicher 1015 vorgeordnete Magnetventil 1115 in eine geöffnete Stellung gebracht. Gleichwohl ist bei geöffneter (und auch geschlossener) Stellung der Magnetventile 1111 bis 1114 bzw. 1115 in der Pneumatikanlage 1001 --aufgrund des vorliegend nicht entsperrten Rückschlagventils 311-- auch eine Betriebsstellung der Pneumatikanlage 1001 entkoppelt von der Druckluftversorgungsanlage 1000 möglich. Mit anderen Worten können bei geschlossenem Rückschlagventil 311 die Magnetventile 1111 bis 1114 beliebig geöffnet und geschlossen werden sodass ein unabhängiger Betrieb der Pneumatikanlage 1001 möglich ist. Insbesondere kann ein Querschalten von Bälgen 1011 bis 1015 (z. B. im Off-Road-Betrieb eines Fahrzeugs) ein Befüllen der Bälge 1011 bis 1015 aus dem Speicher 1015 oder eine Druckmessung in der Pneumatikanlage 1001 über die Galerie 610 vorgenommen werden, ohne dass die Druckluftversorgungsanlage 1000 druckbeaufschlagt wird. Insbesondere wird der Lufttrockner 100 aufgrund des vom Druckluftanschluss 2 zur Druckluftzuführung 1 gesperrten Rückschlagventils 311 und des geschlossenen Steuerventils 320 vor unnötiger Beaufschlagung mit Druckluft geschützt. In vorteilhafter Weise ist eine Beaufschlagung der Lufttrockner 100 mit Druckluft nicht bei jeder Betriebsstellung der Pneumatikanlage 1001 vorteilhaft. Vielmehr ist es für eine effektive und schnelle Regeneration der Lufttrockneranlage 100 vorteilhaft, wenn diese ausschließlich im Falle einer Entlüftung der Pneumatikanlage 1001 vom Druckluftanschluss 2 zur Druckluftzuführung 1 vorgenommen wird; dann mit entsperrtem Rückschlagventil 311. Dazu wird --wie oben erläutert-- das Steuerventil 320 in eine geöffnete Schaltstellung gebracht, so dass sowohl das Entlüftungsventil 312 geöffnet als auch das Rückschlagventil 311 entsperrt wird. Eine Entlüftung der Pneumatikanlage 1001 kann über die erste Drossel 331, das entsperrte Rückschlagventil 311 unter Regeneration der Lufttrockner 100 sowie anschließend über die zweite Drossel 332 und das geöffnete Entlüftungsventil 312 zum Entlüftungsanschluss 3 erfolgen. Anders ausgedrückt ist zur gleichzeitigen entsperrten Betätigung des Rückschlagventils 311 und zum öffnenden Betätigen des Entlüftungsventils 312 ein vom Steuerventil 320 pneumatisch ansteuerbarer Steuerkolben 314 vorgesehen, der z. B. als gestufter Relaiskolben ausgeführt sein kann.

Fig. 4 zeigt in einem Schema der Ansicht (A) den zwei stufigen Kompressor 400 mit einer ersten Verdichterstufe 401 und einer zweiten Verdichterstufe 402 sowie den Elektromotor 500 zur Bildung eines Verdichters 400'. Wie aus Ansicht (B) der Fig. 4 ersichtlich ist, wird der Elektromotor 500 über eine in Fig. 3 erstmals gezeigte Steuereinrichtung 900 betrieben, die ein elektronisches Steuermodul 910 mit einem Steuerbaustein 911 in Form eines Mikrocontrollers und ein Programmmodul 912 mit einem ausführbaren Computerprogramm-Produkt aufweist. Das Programmmodul kann in einem Speicher 913 des Steuermoduls 910 hinterlegt sein. Die Steuereinrichtung 900 weist darüber hinaus ein Regelmodul 920 mit einer ersten Regeleinheit 921 zur Regelung eines Betriebsstroms und einer zweiten Regeleinheit 922 zur Regelung einer Drehzahl des Kompressor-Motors M auf. Weiter weist die Steuereinrichtung 900 eine Analyseeinheit 930 auf, die ausgebildet ist, eine Ist-Drehzahl nK-IST des Kompressormotors M bzw. des Kompressors 400 aus einem zeitlichen Verlauf eines Betriebsstroms des Elektromotors 500 zu ermitteln. Der Steuereinrichtung 900 ist eine Schaltsteuerung 901 zugeordnet, die ausgebildet ist, eine Einschaltzeitdauer (t_ON) und/oder eine Ausschaltzeitdauer (t_OFF) für den Elektromotor (500) variabel vorzugeben.

Die vorgenannte beispielhafte Aufzählung von Einheiten und Modulen einer Steuereinrichtung 900 ist insbesondere nicht abschließend; vielmehr kann die Steuereinrichtung 900 weitere Steuer-, Regel- und Analyse-Einheiten aufweisen, die zur Steuerung und/oder Regelung des Kompressors 400, insbesondere des Kompressormotors M, zweckmäßig sind. Darüber hinaus ist eine in Fig. 4(B) gezeigte Gruppierung von Modulen und Einheiten lediglich beispielhaft und zur Veranschaulichung des Prinzips einer Steuer- und Regeleinheit 900 gemeint.

Eine andere beispielhafte Variante einer Steuer- und Regeleinrichtung 900' ist in Fig. 4(C) gezeigt. Der Steuereinrichtung 900' ist wieder eine Schaltsteuerung 901 zugeordnet, die ausgebildet ist, eine Einschaltzeitdauer (t_ON) und/oder eine Ausschaltzeitdauer (t_OFF) für den Elektromotor (500) variabel vorzugeben.Diese weist, ähnlich wie bereits die Steuer- und Regeleinrichtung 900 der Fig. 4(B), das vorgenannten Steuermodul 910 mit einem Steuerbaustein 911, wie einen Mikrokontroller oder dergleichen, eine Programmodul 912 und einen Speicher 913 auf. Darüber hinaus sieht ein Regelmodul 920 der Steuer- und Regeleinrichtung 900' eine Regeleinheit 921 für die Anlaufphase des Kompressormotors M vor. Insbesondere ist die Regeleinheit 921 ausgebildet, den Anlaufstrom des Betriebsstroms IB, d. h. den Betriebsstrom IB in der Anlaufphase AnP, zu regeln. Weiter weist das Regelmodul 920 eine Regeleinheit 922 für die Lastphase LaP auf. Insbesondere ist die Regeleinheit 922 ausgebildet, eine Drehzahl nK des Kompressormotors M zu regeln. Weiter weist das Regelmodul 920 eine Regeleinheit 923 für eine Auslauf- oder Ausschaltphase AusP des Kompressorsmotors M auf. Insbesondere ist die Regeleinheit 923 ausgebildet, einen Ausschaltstrom des Betriebsstroms IB, d. h. einen Betriebsstrom IB in der Ausschaltphase AusP, zu regeln.

Die Analyseeinheit 930 ist darüber hinaus zur Erfassung von IST-Werten von Parametern des Kompressormotors M ausgelegt. Insbesondere weist die Analyseeinheit 930 ein Eingangsmodul 931 auf, welches ausgebildet ist, eine IST-Wertanforderung an den Kompressormotor M umzusetzen. Ein weiteres Eingangsmodul 932 ist ausgebildet, einen IST-Wert des Betriebsstrom IB des Kompressormotors M zu empfangen. Ein weiteres Eingangsmodul 933 ist ausgebildet, einen Wert der Betriebsspannung des Kompressormotors M, insbesondere einen IST-Wert der Betriebsspannung UB, zu empfangen. Weiter weist die Steuer- und Regeleinheit 900' der Fig. 4(C) eine Schalteinheit 940 zur Umsetzung einer Aktuatorik auf; die Einheit 940 kann dazu eine geeignete Anzahl von Halbleiterschaltern aufweisen. Insbesondere ein vorgenannter Steuerbaustein 911 in Form eines Mikrokontrollers und/oder Halbleiterschalter der Aktuatorik können auf Basis eines oder mehrerer MOSFET-Bausteine gebildet sein.

Die Funktionalität der Steuer- und/oder Regeleinrichtung 900, 900' ist im Wesentlichen in dem Steuermodul 910 (das vor allem Funktionalitäten des Steuerbausteins 911 und des ausführbaren Programmmoduls 912 zusammenbringt) und der Analyseeinheit 930 integriert, gegebenenfalls unter Mitwirkung des Regelmoduls 920. Die Funktionalität der Steuereinrichtung 910, wie sie zur Ausführung auf dem Steuerbaustein 911 implementiert ist, weist im Wesentlichen drei Kategorien auf; nämlich eine Funktionalität für eine Anlaufphase AnP, eine Lastphase LaP und eine Ausschaltphase AusP.

In der Ausschaltphase AusP gibt es eine Funktionalität für einen Ausschaltschwellstrom in der Ausschaltphase AusP.

Insbesondere während der Anlaufphase AnP und der Ausschaltphase AusP können verschiedene Zeitabschnitte vorgesehen sein, denen unterschiedliche Strom-Rampen und Schwellströme und damit An- und Ausschalt-Grenzfunktionen GF der Betriebströme BI zugeordnet sind. Betreffend ein Beispiel wird auf DE 10 2012 024 400 A1 verwiesen.

Fig. 5 zeigt schematisch den detaillierten Schaltplan einer Steuereinrichtung 900 *(host system driver)* in Kombination mit einer Schaltsteuerung 901 (*controller),* wie diese bereits schematisch in Fig. 2, Fig. 3 sowie Fig. 4a, Fig.4b und Fig. 4c gezeigt sind. Eine Einrichtung zum Steuern des an eine Leistungsversorgung 501 angeschlossenen Motors 500 sieht also die Steuerung des Betriebsstroms IB vor; dies mit der genannten Kopplung von Steuereinrichtung 900, 900' und Schaltsteuerung 901. Die Steuerung weist darüber hinaus in einen Freilaufpfad 902 einen Leistungstransistor FET und eine Freilaufdiode D auf. Der Transistor ist vorteilhaft, um im Verpolfall, das Strombegrenzer-Element, insbesondere im Freilaufpfad, abzuschalten und somit die Diode zu schützen. Dazu sei angemerkt, dass aus technischer Sicht zwar vor allem die Steuereinrichtung 900, 900' den Strom begrenzt; dennoch wird hier und im folgenden das Strombegrenzer-Element, insbesondere in einem Freilaufpfad 902, als solches benannt.

Es ist sofort ersichtlich, dass zur Steuerung des Motors 500 zum einen der Betriebsstrom IB ausreichend groß sein sollte, um ein möglichst schnelles Anlaufen des Motors 500 zu garantieren; andererseits sollte der in Fig. 1 gezeigte maximale Betriebsstrom IB-Max und die Startrampe (*ramp up*) des Betriebsstroms IB nicht zu hoch, beziehungsweise zu steil sein. Diese Stromaufnahme im Anlauf hängt jedoch direkt von den Motoreigenschaften und vom angeflanschten Verdichter ab und kann bei direktem Einschalten nicht beeinflusst werden. Um eine anforderungskonforme Stromaufnahme nach Fig. 7 zu erhalten, sind die Maßnahmen dieser Erfindung notwendig.

Wie von der Erfindung erkannt, ist in dieser Ausführungsform die Steuereinrichtung 900, 900' dazu ausgelegt, den Betriebsstrom IB als Funktion der Einschaltzeitdauer t_ON zu gestalten - ein Beispiel dafür ist in der folgenden Fig. 7 gezeigt.

Die mit der Steuerung und Regelung des Betriebsstroms IB verbundene Motorabschaltung hat infolge der mit der Abschaltung verbundenen Induktionswirkung für den Betriebsstrom IB zur Folge, dass es zu einer Stromüberhöhung kommen kann - im Abschaltvorgang. Diese Stromüberhöhung muss durch den Freilaufpfad 902 --das heißt die Freilaufdiode D, die in Kombination mit dem Leistungstransistor FET vorgesehen ist- getragen werden, das heißt in Widerstandswärme gewandelt werden. Diese, hier als Dissipationsenergie bezeichneten, Verluste sollten gleichwohl nicht zu hoch sein.

Andererseits muss der Freilaufpfad 902 auf die zu erwartenden Dissipationsenergien ausgelegt sein. Die Erfindung hat nun erkannt, dass diese Dissipationsenergie durch eine Gestaltung des Betriebsstroms IB als Funktion der Ausschaltzeitdauer t_OFF gezielt gestaltet werden kann, sodass einerseits eine sachgerechte Auslegung des Freilaufpfades 902 und eine Verringerung der Dissipationsenergie möglich ist. In diesem Beispiel einer Ausführungsform ist der Betriebsstrom IB (t_OFF) symbolisch als Verluststrom durch den Freilaufpfad dargestellt.

Die Einschaltzeitdauer t_ON und die Ausschaltzeitdauer t_OFF sind symbolisch als Regelgrößen in dem Steuer- und Regelkreis R900 der Steuerung -- aus einer Kopplung der Steuereinrichtung 900, 900' und der Schaltsteuerung 901-dargestellt.

Gemäß dem Konzept der Erfindung ist in dieser Ausführungsform vorgesehen, dass der Schaltsteuerung 901 ein Messwert für den Betriebsstrom IB und ein Messwert für die Betriebsspannung UB als IST-Werte IB_IST und UB_IST zugeführt werden. Je nach Höhe der IST-Werte IB_IST und UB_IST, legt die Schaltsteuerung 901 ein dynamisch veränderbares Kontrollsignal CS fest, das die Einschaltzeitdauer t_ON und die Ausschaltzeitdauer t_OFF festlegt.

Grundsätzlich kann dieses Kontrollsignal CS volldynamisch gestaltet werden in Abhängigkeit der anliegenden Betriebsströme und Betriebsspannungen IB_IST und UB_IST. Es kann jedoch auch eine Einschaltzeitdauer t_ON und eine Ausschaltzeitdauer t_OFF für bestimmte Zeitabschnitte variabel aber fest vorgegeben werden.

Grundsätzlich hat es sich bewährt, beispielsweise während einer Anlaufphase *(ramp up)* die Einschaltzeitdauer für eine vorgebbare Rampe eines hochzufahrenden Betriebsstroms für den Motor 500, variabel fest vorzugeben mit ansteigenden Werten und die Ausschaltzeitdauer t_OFF dynamisch variabel als Funktion der anliegenden Betriebsströme IB zu gestalten. Anders ausgedrückt wird man --wie beispielsweise in Fig. 7 gezeigt-- für ein *ramp up* des Motors 500 beispielsweise ein lineares Ansteigen der Einschaltzeitdauern t_ON festlegen, sodass sich eine Schwellstrom-Grenzfunktion als Linearcharakteristik zum Anfahren des Motors 500 ergibt. Darauf abgestimmt ist der Freilaufpfad 902, in dem gleichwohl überschüssige Stromspitzen als Widerstandswärme dissipiert werden kann. Des Weiteren kann ein Betriebsstrom IB (t_OFF) als Funktion der Ausschaltzeitdauer im Freilaufpfad limitiert werden; dies limitiert also die dissipierte Energie im Freilaufpfad 902.

Das Kontrollsignal CS stellt also mit der Kombination der Ausschaltzeitdauer t_OFF und der Einschaltzeitdauer t_ON einen Kompromiss dar zwischen dem Bedürfnis den Motor 500 mit Begrenzerstromrampe gleichwohl möglichst hohen Stromamplituden und damit vergleichsweise schnell hochzufahren und dennoch möglichst wenig Energie im Freilaufpfad 902 zu dissipieren.

Das Konzept der Erfindung, wie es hier in Fig. 5 anhand einer bevorzugten Ausführungsform erläutert ist, hat sich bewährt und ermöglicht die zielgerichtete Auslegung von Komponenten insbesondere im Freilaufpfad, sodass eine Überdimensionierung vermieden und damit zu einer Kostenersparnis genutzt werden kann.

Fig. 6 zeigt als Beispiel die mit Häkchen gekennzeichnete Kombination von in der Schaltsteuerung 901 zusammengeführten Funktionen einer Einschaltzeitdauer t_ON als variable aber feste Vorgabe im Regelkreis R900 und die betriebsstromabhängige Gestaltung der Ausschaltzeitdauer t_OFF als dynamisch variable Größe im Steuer- und Regelkreis R900. Ferner kann die Einschaltzeitdauer t_ON auch als betriebsstromabhängige Gestaltung in dynamisch variabler Größe zur Anwendung kommen.

Das Kontrollsignal CS wird an die Steuereinrichtung 900, 900' für den Elektromotor 500 übergeben und legt dessen Ein- und Abschaltkennlinie --sozusagen als zeitvariables PWM Signal-- fest. Mit dieser Vorgehensweise kann vor allem die Betriebsweise des Motors 500 optimiert werden, das heißt die Einschaltzeitdauern t_ON können in optimaler Weise so gesetzt werden, dass der Motor 500 mit optimierter Anlaufgeschwindigkeit hochfährt; entsprechende Stromrampen und Stromamplituden des Betriebsstroms IB sind damit im Bereich des grenzwertigen Zulässigen.

Des Weiteren kann mit der Gestaltung der Ausschaltzeitdauer t_OFF die Energiedissipation im Freilaufpfad 902 bis an die Grenze der Komponentenauslegung geführt werden, also im erlaubten Grenzbereich stattfinden. Der in Fig. 6 in Kombination mit Fig. 5 dargestellte Algorithmus sichert also die an sich widersprechenden Erfordernisse zum einen im Freilaufpfad vergleichsweise wenig überdimensionierte und deswegen preiswerte Komponenten einzusetzen und dennoch Stromamplituden und Gradienten in ausreichender Weise zu beschränken.

Fig. 7 zeigt eine Messdemonstration für eine *ramp up* Phase, das heißt ein Hochlaufen eines Elektromotors 500 gemäß der oben erfolgten Beschreibung. Fig 7 zeigt dazu den Betriebsstrom IB in Ampere als Funktion der Zeit t in Sekunden. Erkennbar ist zunächst der mit GRAD bezeichnete Gradient der Anlaufenveloppe E(IB) für den Betriebsstrom IB; also dessen Schwellstrom-Grenzfunktion GF.

Der Betriebsstrom IB selbst als Funktion der Zeit, zeigt eine Abfolge von Amplitudenpeaks, die durch die genannte Anlaufenveloppe E(IB) beschrieben werden können und unterhalb dieser liegen und außerdem der genannten Rampe GRAD folgen.

Das dahinter stehende Verfahren sieht eine Festlegung der Einschaltzeitdauern t_ON vor, die variabel dynamisch als Funktion des Betriebsstroms IB veränderlich im vorliegenden Beispiel mit bevorzugt vier Zeitphasen AnP1, AnP2, AnP3 und AnP4 festgelegt und vorbestimmt sind. Insbesondere wird der Betriebsstroms IB während der Einschaltzeitdauer t_ON kontinuierlich von der Schaltsteuerung 901 erfasst bzw. zurückgemessen und mit dem Ansteuersignal CS verknüpft, nämlich über das zuvor beschriebene Programmmodul 912 und den Steuerbaustein 911 des Steuermoduls 910 in der Steuereinrichtung 900. Diesbezüglich wird auf die Offenbarung der DE 10 2012 024 400 A1 --und dort insbesondere auf die beispielhaften Vorgehensweisen, wie sie in Fig. 5 bis Fig. 9 derselben beschrieben sind-- hingewiesen. Nach der Anlaufphase AnP4 schließt sich eine Lastphase LaP mit fallendem Strom an; in der Lastphase LaP befindet sich der Elektromotor 500 im Nennbetrieb.

Während der Anlaufphase (*ramp up phase*) in den vier Zeitphasen AnP1, AnP2, AnP3 und AnP4 ist die Ausschaltzeitdauer t_OFF variabel dynamisch als Funktion des Betriebsstroms IB veränderlich. Besonders vorteilhaft ergibt sich die Implementierung von Ausschaltzeiten bzw. der jeweiligen Ausschaltzeitdauer t_OFF die den Zeitphasen AnP1, AnP2, AnP3 und AnP4, mit sich entsprechend einstellenden Werten des Betriebsstroms IB zugeordnet werden. Dies führt dazu, dass in jeder Zeitphase AnP1, AnP2, AnP3 und AnP4 die dissipierte Energie im Freilaufpfad 902 so gering wie möglich und in jedem Fall unterhalb der Auslastungsgrenze der benutzten Freilaufpfadkomponenten gehalten wird. Eine Überhitzung des Freilaufpfads 902 oder gar ein Ausfall der Komponenten darin ist damit sicher vermieden. Der Freilaufpfad 902 erfüllt also langfristig gewährleistet seine Funktion zur Absicherung der Strombegrenzung.

Konkret zeigt sich, dass in dem ersten Anlaufzeitabschnitt AnP1 von 800 µs der Betriebsstrom IB des Elektromotors noch vergleichsweise gering ist und im Bereich von 30 A bis 40 A liegt - eine vergleichsweise lange Ausschaltzeitdauer von t_OFF=800 µs ist hier möglich beim vergleichsweise geringen Startstrom von 30 A und dem genannten Stromgradienten unterhalb von 300 A/s. Grundsätzlich kann damit die Ausschaltzeitdauer t_OFF auch variabel fix gestaltet werden und auf den Wert von 800 µs zum Beispiel festgelegt werden.

Ähnlich wird in den weiteren Anlaufzeitabschnitten AnP2, AnP3 und AnP4 ein angepasster abnehmender Wert der Ausschaltzeitdauer t_OFF variabel aber fest festgelegt oder aber als Funktion des Betriebsstroms variabel dynamisch angepasst. Im zweiten Anlaufzeitabschnitt AnP2 beträgt er 600 µs, im dritten AnP2 400 µs und im vierten AnP4 200 µs; dies bei steigendem Betriebsstrom von bis zu 70 A. Diese Verlängerung der Ausschaltzeitdauer t_OFF verringert zudem die Energiedissipation im Freilaufpfad 902. Im Falle einer Drehzahlregelung kann in der Lastphase LaP dieser Wert der Ausschaltzeitdauer t_OFF gleich 200 µs beibehalten werden, um auch bei fallenden Strömen die Belastung des Freilaufpfades möglichst gering zu halten.

Fig. 8 zeigt ein erstes Beispiel einer Berechnung einer Temperaturzunahme als Funktion der Ausschaltzeitdauer t_OFF während einer *ramp down* Phase, das heißt während eines Ausschaltvorgangs eines Elektromotors und entsprechender Regelung. Im gezeigten Bereich einer Ausschaltzeitdauer t_OFF zwischen 200 µs und 800 µs wird die Energiedissipation im Freilaufpfad reguliert, ohne dass diese zu stark ansteigt, auch wenn eine Variation in dem Zeitbereich um 1000 µs erkennbar ist.

Gleichwohl liegt der Temperaturanstieg aller Komponenten im Freilaufpfad 902 nicht über 40 Grad Kelvin, was zu einer maximal erwarteten Temperatur im FET oder in der Diode von beispielsweise 130 °C bei einer Umgebungstemperatur von 80 °C führt. Die Maximaltemperatur im Schaltübergang des FET liegt bei höchstens 175 °C und wird nicht überschritten.

Fig. 9 zeigt einmal im oberen Bereich als Funktion --eine Rampe GRAD in Millisekunden und unten als Funktion der Ausschaltzeitdauer t_OFF in Millisekunden-- die Temperaturzunahme in dem Freilaufpfad 902.

In dem Regelungsbereich einer Stromrampe unterhalb von 300 A/s und in dem Bereich der regelbaren Auslaufschaltzeitdauer von t_OFF= 200..800 µs (also für das Beispiel der Fig. 7) ist lediglich eine theoretische Temperaturerhöhung von unterhalb 35 Kelvin erkennbar, was zu einer maximal zu erwartenden Temperatur in einer Komponente (FET oder Diode D) von höchstens 125 °C bei einer Umgebungstemperatur von 80 °C führen würde. Die maximale Schaltübergangstemperatur von 175 °C für den FET beziehungsweise die Diode wird nicht überschritten.

Damit zeigen die in Fig. 7 demonstrierten und in Fig. 8 und Fig. 9 belegten Ergebnisse, dass der Betrieb eines Elektromotors 500 mit Steuer- und Regelkreiskopplung von Steuereinrichtung 900, 900' und Schaltsteuerung 901 im Endeffekt eine dynamisch variable PWM Steuerung und Begrenzung der induktiven Lasten eines Elektromotors speziell für einen Kompressorbetrieb eines Verdichters erlauben; nämlich unter Optimierung einerseits der Verdichterdynamik, insbesondere beim Hochfahren, und gleichzeitigen Verminderung der dissipativen Energieverluste. Das Konzept erlaubt die nachhaltige und langfristige Verwendung von sachgerecht ausgelegten Komponenten im Freilaufpfad, ohne dass diese zu sehr überdimensioniert werden müssen. Dies führt insgesamt zu einer erheblichen Kosteneinsparung und effizienten Auslegung einer Steuerung für einen Elektromotor 500, für einen Verdichter 400, 400'.

### Bezugszeichenliste

- 0: Luftzuführung
- 0.1: Filterelement
- 1: Druckluftzuführung
- 2: Druckluftanschluss
- 3: Entlüftungsanschluss
- 100: Lufttrockner
- 100': Trocknermodul
- 140: Trockenbehälter
- 180: Lufttrockner
- 200: Pneumatikhauptleitung
- 230: Zweigleitung
- 240: Entlüftungsleitung
- 250: pneumatische Steuerleitung
- 251: Leitungsabschnitt
- 260: Entlüftungsleitung
- 261: Zweiganschluss
- 300: Ventilanordnung
- 301: Flansch
- 301': Luftverteilmodul
- 310: Wegeventilanordnung
- 310': Ventilgehäusemodul
- 311: Rückschlagventil
- 312: Entlüftungsventil
- 313: Druckbegrenzung
- 314: Kolben
- 315: Feder
- 320: Magnetventil, Steuerventil
- 321: Steuerleitung
- 322: Spule
- 330: Boostventil
- 330': Boostventilgehäusemodul
- 331: erste Drossel
- 332: zweite Drossel
- 400: Kompressor
- 400': Verdichter
- 401: erste Verdichterstufe
- 402: zweite Verdichterstufe
- 500: Elektromotor
- 600: Pneumatikleitung
- 601,602,603,604: Federzweigleitung
- 605: Speicherzweigleitung
- 610: Galerie
- 700: Aufhängung
- 710: Federlagerungen
- 720: Befestigungsanschlüsse
- 900, 900': Steuereinrichtung, Regeleinrichtung
- 901: Schaltsteuerung
- 902: Strombegrenzungselement(Freilaufpfad)
- 910: Steuermodul
- 911: Steuerbaustein
- 912: Programmmodul
- 913: Speicher
- 920: Regelmodul
- 921: erste Regeleinheit
- 922: zweite Regeleinheit
- 930: Analyseeinheit
- 923: dritte Regeleinheit
- 931, 932, 933: Eingangsmodule
- 940: Aktuatorik
- 1000: Druckluftversorgungsanlage
- 1001: Pneumatikanlage
- 1002: Druckluftversorgungssystem
- 1010: Ventilblock
- 1011, 1012, 1013, 1014: vier Bälge
- 1015: Speicher
- 1111, 1112, 1113, 1114: Magnetventil
- A1, A2: Anschlussebene, Anschlussseite
- AnP: Anlaufphase
- AnP1, AnP2, Anp3, Anp4: erster, zweiter, dritter, vierter Anlaufzeitabschnitt
- LaP: Lastphase
- AusP: Ausschaltphase
- G: Gehäuseanordnung
- GF: Schwellstrom-Grenzfunktion
- Grad: Steigung
- IB: Betriebsstrom
- E(IB): Enveloppe
- M: Kompressormotor, Elektromotor
- CS: Steuersignal
- UB: Betriebsspannung (Motor 500)
- t: Zeit
- t_ON: Einschaltzeitdauer
- t_OFF: Auszeitschaltdauer
- PWM: PWM Kennlinie
- R: Regelschleife

## Patentansprüche

1. Verdichter (400') zur Erzeugung von Druckluft, insbesondere für eine Druckluftversorgungsanlage (1000) eines Fahrzeugs, mit:
- einem Elektromotor (500) in Form eines bürstenbehafteten Gleichstrom-Elektromotors (BDC Elektromotor)
- einem Kompressor, der über den Elektromotor (500) antreibbar ist, wobei
- dem Elektromotor (500) eine Steuereinrichtung (900, 900') zur Begrenzung seines Betriebsstroms (IB) zugeordnet ist,
**dadurch gekennzeichnet, dass**
- der Steuereinrichtung (900, 900') ein elektrisches Strombegrenzer- Element (902) in einem Freilaufpfad parallel geschaltet zum Elektromotor (500) zugeordnet ist, das ausgebildet ist, den Betriebsstrom (IB) variabel zu begrenzen, und dass
- der Steuereinrichtung (900, 900') eine Schaltsteuerung (901) zugeordnet ist, die ausgebildet ist, eine Einschaltzeitdauer (t_ON) und eine Ausschaltzeitdauer (t_OFF) für den Elektromotor (500) variabel vorzugeben, und dass
das elektrische Strombegrenzer- Element (902) eine Freilauf-Diode (D) und einen Leistungs-Transistor (FET) umfasst, welche in dem Freilaufpfad in Reihe angeordnet sind.

2. Verdichter nach Anspruch 1 **dadurch gekennzeichnet, dass**
- die Steuereinrichtung (900, 900') ein elektronisches Steuermodul (910) aufweist, wobei mittels dem elektronischen Steuermodul (910) der Steuereinrichtung (900, 900') der Elektromotor (500) zur Begrenzung eines Betriebsstroms (IB) des Elektromotors (500) steuerbar ist, wobei
- das elektronische Steuermodul (910) einen Steuerbaustein (911) und ein ausführbares Programmmodul (912) aufweist, und das damit ausgebildet ist, den Betriebsstrom (IB) zeitlich variabel zu begrenzen.

3. Verdichter nach Anspruch 1 oder 2 **dadurch gekennzeichnet, dass** das elektronische Steuermodul (910) ausgebildet ist, einen den Betriebsstrom (IB) begrenzenden Schwellstrom (IS) zeitlich variabel vorzugeben.

4. Verdichter nach Anspruch 1 **dadurch gekennzeichnet, dass** der Leistungs-Transistor (FET) als ein MOS-FET mit integrierter Freilaufdiode ausgeführt ist.

5. Verdichter nach wenigstens einem der Ansprüche 1 bis 4 **dadurch gekennzeichnet, dass** die Steuereinrichtung (900, 900') und die Schaltsteuerung (901) im Rahmen eines Regel- und/oder Steuerkreises gekoppelt sind, wobei der Regel- und/oder Steuerkreis aus der Steuereinrichtung (900, 900') und der Schaltsteuerung (901):
- zur Aufnahme eines Betriebsstroms und/oder einer Betriebsspannung für den Elektromotor (500), in der Schaltsteuerung (901), insbesondere von der Steuereinrichtung (900, 900') und/oder dem Elektromotor (500), und
- zur Ausgabe der Einschaltzeitdauer (t_ON) und der Ausschaltzeitdauer (t_OFF), vorzugsweise mittels einem Kontrollsignal, von der Schaltsteuerung (901), insbesondere an die Steuereinrichtung (900, 900') und/oder den Elektromotor (500), ausgebildet ist.

6. Verdichter nach wenigstens einem der Ansprüche 1 bis 5 **dadurch gekennzeichnet, dass** das elektrische Strombegrenzer- Element (902) parallel geschaltet ist zum Elektromotor (500), und dieses ausgebildet ist:
- zur Abgabe eines IST-Wertes des Betriebsstroms und/oder einer Betriebsspannung zur Steuereinrichtung (900, 900') und/oder zu der Schaltsteuerung (901) und/oder
- zur Aufnahme eines Betriebsstroms und/oder einer Betriebsspannung gemäß einem SOLL-Wert der Steuereinrichtung (900, 900') und dieser vorzugsweise gemäß einem Kontrollsignal von der Schaltsteuerung (901) an die Steuereinrichtung (900, 900') und/oder den Elektromotor (500).

7. Verdichter nach wenigstens einem der Ansprüche 1 bis 6, **dadurch gekennzeichnet, dass** die Schaltsteuerung (901) ausgebildet ist, die Einschaltzeitdauer (t_ON) und/oder die Ausschaltzeitdauer (t_OFF)
- variabel aber fest, oder
- variabel und dabei dynamisch veränderbar vorzugeben.

8. Verdichter nach wenigstens einem der Ansprüche 1 bis 7, **dadurch gekennzeichnet, dass**
die Schaltsteuerung (901) ausgebildet ist,
- den Betriebsstrom für den Elektromotor (500) auf einem Wert unter einem maximalen Limit-Strom von I_max = 30A zu halten und/oder
- einen Gradienten des Betriebsstroms für den Elektromotor (500)
auf einem Wert unter einem maximalen Limit-Gradienten des Stroms von G_max = 300A/s zu halten.

9. Verdichter nach wenigstens einem der Ansprüche 1 bis 8, **dadurch gekennzeichnet, dass** die Schaltsteuerung (901) ausgebildet ist,
- einen zur Umgebungstemperatur (von vorzugsweise 40°C bis 100°C) relativen Temperaturanstieg in dem elektrischen Strombegrenzer- Element (902) auf einem Wert unter 40°C, insbesondere auf unter 35°C, insbesondere auf unter 20°C zu halten, und/oder
- eine absolute Temperatur auf einem Wert unter 140°C, insbesondere auf unter 135°C zu halten, insbesondere auf unter 130°C, und/oder eine Junction-Temperatur im Strombegrenzer- Element auf unter 180°C, insbesondere auf unter 175°C, insbesondere auf unter 170°C zu halten.

10. Verdichter nach wenigstens einem der Ansprüche 1 bis 9, **dadurch gekennzeichnet, dass** die Schaltsteuerung (901) ausgebildet ist, die Einschaltzeitdauer (t_ON) und/oder die Ausschaltzeitdauer (t_OFF) auf unter 1000 µs, insbesondere auf unter 800 µs, unter 600 µs, unter 400 µs und/oder unter 200 µs zu halten.

11. Verdichter nach einem der Ansprüche 1 bis 10, **dadurch gekennzeichnet, dass** der Kompressor ein zweistufiger Kompressor (400) mit wenigstens einer ersten und einer zweiten Verdichterstufe (401, 402) ist.

12. Verdichter nach einem der Ansprüche 1 bis 11, **dadurch gekennzeichnet, dass**
- das Programmmodul (912) ausgebildet ist, zur Begrenzung des Betriebsstroms (IB) wenigstens eine Schwellstrom-Grenzfunktion (GF) des Schwellstroms (IS) als Funktion der Zeit (t) vorzugeben, und
- der Steuerbaustein (911) ausgebildet ist, eine Betriebsenergie des Elektromotors (500) zu unterbrechen, insbesondere eine Betriebsspannung (UB) desselben.

13. Verdichter nach einem Ansprüche 1 bis 12, **dadurch gekennzeichnet, dass** das elektronische Steuermodul (910), insbesondere eine Analyseeinheit (930) und/oder eine Aktuatorik (940), ausgebildet ist, zu prüfen, ob der Betriebsstrom (IB) den Schwellstrom (IS) der wenigstens einen Schwellstrom-Grenzfunktion (GF) erreicht und/oder die Betriebsenergie zu unterbrechen, insbesondere nach einer vorbestimmten Unterbrecherfrequenz (SR) und/oder für den Fall, dass der Betriebsstrom (IB) den Schwellstrom (IS) der wenigstens einen Schwellstrom-Grenzfunktion (GF) erreicht.

14. Verdichter nach einem der Ansprüche 12 oder 13, **dadurch gekennzeichnet, dass** die Betriebsenergie variabel zu unterbrechen ist mittels der der Steuereinrichtung (900, 900') zugeordneten Schaltsteuerung (901) gemäß der Einschaltzeitdauer (t_ON) und/oder der Ausschaltzeitdauer (t_OFF) für den Elektromotor (500).

15. Verdichter nach einem der vorhergehenden Ansprüche **dadurch gekennzeichnet, dass** das elektronische Steuermodul (910) zur Steuerung eines Sanft-Anlaufs (CSS) und/oder eines Sanft-Auslaufs ausgebildet ist.

16. Verdichter nach einem der Ansprüche 1 bis 15, **dadurch gekennzeichnet, dass**
- ein Wechsel von einer Anlaufphase (AnP) --umfassend einen Sanftanlauf (CSS) des Kompressors-- zu einer Lastphase (LaP) --nur umfassend einen stromunbegrenzten Lauf des Kompressors (400)-- unabhängig von einem Betriebsstrom (IB) des Kompressors (400) erfolgt, und/oder
- ein Wechsel von einer Lastphase (LaP) --nur umfassend einen stromunbegrenzten Lauf des Kompressors (400)-- zu einer Auslaufphase (AusP) --umfassend einen Sanftauslauf des Kompressors-- unabhängig von einem Betriebsstrom (IB) des Kompressors (400) erfolgt.

17. Verdichter nach einem der Ansprüche 1 bis 16, **dadurch gekennzeichnet, dass** das elektronische Steuermodul (910) weiter zur Steuerung eines Sanftausschaltens ausgebildet ist derart, dass eine zeitlich begrenzte Zeitphase eines zeitlich variabel begrenzten Ausschalt-Betriebsstroms (IB) vorgegeben ist.

18. Verdichter nach einem der Ansprüche 1 bis 17, **dadurch gekennzeichnet, dass** gekennzeichnet, dass die elektronische Steuereinrichtung (900) weiter eine erste Regeleinheit (921) aufweist, die ausgebildet ist, einen Betriebsstrom (IB) des Elektromotors zu regeln unter Vorgabe des Schwellstroms (IS) als SOLL-Strom.

19. Verdichter nach einem der Ansprüche 1 bis 18, **dadurch gekennzeichnet, dass** die elektronische Steuereinrichtung (900) weiter ein Regelmodul (920) mit einer zweiten Regeleinheit (922) aufweist, die ausgebildet ist, eine Drehzahl (nK) des Elektromotors (500) zu regeln, insbesondere unter Vorgabe einer bereichsweise konstanten Drehzahlobergrenze, insbesondere als Funktion des Betriebsstroms (IB) oder einer daraus abgeleiteten Größe.

20. Verdichter nach einem der Ansprüche 1 bis 19 **dadurch gekennzeichnet, dass** die Regeleinheit ausgebildet ist, eine Drehzahlvariabilität des Elektromotors (500) als Funktion des Betriebsstroms (IB) oder einer daraus abgeleiteten Größe über eine PWM-Kennlinie (PWM) zu begrenzen, vorzugsweise in Form einer, insbesondere im Programmmodul (912) hinterlegten Effektiv-Spannungsrampe (Ueff) als Funktion des Betriebsstroms (IB).

21. Druckluftversorgungsanlage (1000) zum Betreiben einer Pneumatikanlage (1001), insbesondere einer Luftfederanlage eines Fahrzeugs, aufweisend:
- eine Druckluftzuführung (1) mit einem Verdichter (400') nach einem der Ansprüche 1 bis 20 zur Erzeugung von Druckluft, mit einem Elektromotor (500) in Form eines bürstenbehafteten Gleichstrom-Elektromotors (BDC Elektromotor) und einem Kompressor (400),
- einen Druckluftanschluss (2) zur Pneumatikanlage (1001)
- einen Entlüftungsanschluss (3) zur Umgebung
- eine erste pneumatische Verbindung zwischen der Druckluftzuführung (1) und dem Druckluftanschluss (2), die einen Lufttrockner (180) und ein Trennventil aufweist,
- eine zweite pneumatische Verbindung zwischen dem Druckluftanschluss (2) und dem Entlüftungsanschluss (3).

22. Pneumatisches System mit der Druckluftversorgungsanlage (1000) nach Anspruch 21 und mit einer Pneumatikanlage (1001), wobei die Pneumatikanlage (1001) in Form einer Luftfederanlage gebildet ist, die eine Galerie (610) und wenigstens eine an die Galerie (610) pneumatisch angeschlossene Zweigleitung (601, 602, 603, 604, 605) mit einem Balg und/oder einem Speicher (1011, 1012, 1013, 1014, 1015) sowie einem dem Balg und/oder dem Speicher vorgeordneten Wegeventil (1111, 1112, 1113, 1114, 1115) aufweist.

23. Verfahren zum Betrieb eines Elektromotors in Form eines bürstenbehafteten Gleichstrom-Elektromotors (BDC Elektromotor) in Rahmen eines Verdichters (400') nach einem der Ansprüche 1 bis 20, zur Erzeugung von Druckluft für eine Druckluftversorgungsanlage eines Fahrzeugs, mit:
- einem Elektromotor (500) und einem Kompressor (400), der über den Elektromotor (500) angetrieben wird, wobei
- dem Elektromotor (500) eine Steuereinrichtung (900, 900') zur Steuerung des Elektromotors (500) zur Begrenzung eines Betriebsstroms (IB) des Elektromotors (500) zugeordnet ist,
**dadurch gekennzeichnet, dass**
- der Steuereinrichtung (900, 900') ein elektrisches Strombegrenzer- Element (902) in einem Freilaufpfad zugeordnet ist, mitttels dem ein Betriebsstrom (IB) variabel begrenzt wird, , und
- das elektrische Strombegrenzer- Element (902) eine Freilauf-Diode (D) und einen Leistungs-Transistor (FET) umfasst, welche in dem Freilaufpfad in Reihe angeordnet sind, und wobei
- der Steuereinrichtung (900, 900') eine Schaltsteuerung (901) zugeordnet ist, mittels der eine Einschaltzeitdauer (t_ON) und eine Ausschaltzeitdauer (t_OFF) für den Elektromotor (500) variabel vorgegeben wird.

24. Verfahren nach Anspruch 23 **dadurch gekennzeichnet, dass**
- die Einschaltzeitdauer (t_ON) für den Elektromotor (500) derart vorgegeben wird, dass der Betriebsstrom begrenzt wird, und/oder
- die Ausschaltzeitdauer (t_OFF) für den Elektromotor (500)) derart vorgegeben wird, dass die Wärmeaufnahme des Strombegrenzer- Elements (902) begrenzt wird.

25. Verfahren nach einem der Ansprüche 20 bis 24 **dadurch gekennzeichnet, dass** der Elektromotor (500) mittels einem elektronischen Steuermodul (910) gesteuert wird, mittels dem ein Betriebsstrom (IB) des Elektromotors (500) begrenzt wird und mittels dem elektronischen Steuermodul (910), aufweisend einen Steuerbaustein (911) mit einem ausführbaren Programmmodul (912), ein den Betriebsstrom (IB) begrenzender Schwellstrom (IS) zeitlich variabel vorgegeben wird.

26. Verfahren nach einem der Ansprüche 20 bis 25 **dadurch gekennzeichnet, dass**
- zur Begrenzung des Betriebsstroms (IB) mittels dem ausführbaren Programmmodul (912) wenigstens eine Schwellstrom-Grenzfunktion (GF) des Schwellstroms (IS) als Funktion der Zeit (t) vorgegeben wird, und der Betrieb des Elektromotors (500) mittels dem Steuerbaustein (911) unterbrochen wird, insbesondere eine Betriebsspannung (UB) desselben, für den Fall, dass der Betriebsstrom (IB) den Schwellstrom (IS) der wenigstens einen Schwellstrom-Grenzfunktion (GF) erreicht, und/oder
- die Betriebsenergie variabel zu unterbrechen ist mittels der der Steuereinrichtung (900, 900') zugeordneten Schaltsteuerung (901) gemäß der Einschaltzeitdauer (t_ON) und/oder der Ausschaltzeitdauer (t_OFF) für den Elektromotor (500).

27. Verfahren nach einem der Ansprüche 20 bis 25 **dadurch gekennzeichnet, dass**, insbesondere mittels der Schaltsteuerung (901),
- die Einschaltzeitdauer (t_ON) und/oder die Ausschaltzeitdauer (t_OFF) für den Elektromotor (500) variabel und abhängig von einem Betriebsstrom und/oder einer Betriebsspannung für den Elektromotor (500) vorgegeben werden.

28. Verfahren nach einem der Ansprüche 20 bis 27 **dadurch gekennzeichnet, dass**, insbesondere mittels der Schaltsteuerung (901), vorzugsweise abhängig von einem Betriebsstrom und/oder einer Betriebsspannung für den Elektromotor (500),
- die Einschaltzeitdauer (t_ON) und/oder die Ausschaltzeitdauer (t_OFF) direkt dem Elektromotor (500) variabel vorgegeben, und/oder
- zunächst der Steuereinrichtung (900, 900') variabel vorgegeben, vorzugsweise über die Steuereinrichtung (900, 900') modifiziert dem Elektromotor (500) vorgegeben werden.

29. Verfahren nach einem der Ansprüche 20 bis 28 **dadurch gekennzeichnet, dass**, insbesondere mittels der Schaltsteuerung (901),
- die Ausschaltzeitdauer (t_OFF) variabel aber fest mit abfallenden Werten vorgegeben werden, nämlich mit zunehmender Betriebszeit des Elektromotors (500) und/oder für steigenden Betriebsstrom/Betriebsspannung für den Elektromotor (500), und/oder
- die Einschaltzeitdauer (t_ON) variabel aber fest mit ansteigenden Werten vorgegeben werden, nämlich mit zunehmender Betriebszeit des Elektromotors (500) und/oder für fallende Werte von Betriebsstrom und/oder Betriebsspannung für den Elektromotor (500), vorzugsweise unmittelbar nach dem Betriebsstart das Elektromotors (500) .

## Claims

1. A compressor (400') for generating compressed air, in particular for a compressed air supply system (1000) in a vehicle, the compressor system comprising:
- an electric motor (500) in the form of a brushed direct current electric motor (BDC electric motor)
- a compressor configured to be driven by the electric motor (500), wherein
- a control unit (900, 900') for controlling the electric motor (500) and allocated to the electric motor so as to delimit an operating current (IB) of the electric motor **characterized in that**
- an electric current limiter element (902) in a free-running current path parallel connected to the electric motor (500) is allocated to the control unit (900, 900'), the free-running current path being configured to delimit the operating current (IB) of the electric motor in a variable manner, and
- a switch controller (901) is allocated to the control unit (900, 900'), the switch controller being configured to specify a switched-on time period (t_ON) and/or a switched-off time period (t_OFF) for the electric motor (500) in a variable manner, and
the electric current limiter element (902) comprises a free-wheeling diode (D) and a power transistor (FET), which are arranged in series in the free-running current path.

2. The compressor according to claim 1, **characterized in that**
- the control unit (900, 900') comprises an electronic control module (910), wherein by means of the electronic control module (910) of the control unit (900, 900') the electric motor (500) can be controlled so as to delimit the operating current (IB) of the electric motor (500), wherein
- wherein the electronic control module (910) comprises a control component (911) and an executable program module (912) and is configured to delimit the operating current (IB) in a variable manner with respect to time.

3. The compressor according to claim 1 or 2, **characterized in that** the electronic control module (910) is configured to specify a threshold current (IS) that limits the operating current (IB) in a variable manner with respect to time.

4. The compressor according to claim 1, **characterized in that** the power transistor (FET) is designed as a MOSFET power transistor having an integrated free-wheeling diode.

5. The compressor according to at least one of claims 1 to 4, **characterized in that** the control unit (900, 900') and the switch controller (901) are coupled within a closed-loop and/or an open-loop control circuit, wherein the closed-loop and/or the open-loop control circuit is configured
- to receive, from the control unit (900, 900') and the switch controller (901), an operating current and/or an operating voltage for the electric motor (500), in the switch controller (901), in particular from the control unit (900, 900') and/or the electric motor (500), and
- to output the switched-on time period (t_ON) and/or the switched-off time period (t_OFF), preferably by means of a control signal, from the switch controller (901), in particular to the control unit (900, 900') and/or the electric motor (500).

6. The compressor according to at least one of claims 1 to 5, **characterized in that** the current limiter element (902) is connected in parallel to the electric motor (500) and is configured
- to output an ACTUAL value of the operating current and/or an operating voltage to the control unit (900, 900') and/or to the switch controller (901), and/or
- to receive an operating current and/or an operating voltage in accordance with a desired value of the control unit (900, 900') in accordance with a control signal from the switch controller (901) to the control unit (900, 900') and/or the electric motor (500).

7. The compressor according to at least one of claims 1 to 6, **characterized in that** the switch controller (901) is configured so as to specify the switched-on time period (t_ON) and/or the switched-off time period (t_OFF)
in a variable but fixed,
or in a variable and dynamically changeable, manner.

8. The compressor according to at least one of claims 1 to 7, **characterized in that**
the switch controller (901) is configured to
- maintain the operating current for the electric motor (500) at a value below a maximum limit current of I_max=30A and/or
- to maintain a gradient of the operating current for the electric motor (500) at a value below a maximum limit gradient of the current of G_max=300A/s.

9. The compressor according to at least one of claims 1 to 8, **characterized in that** the switch controller (901) is configured to
- maintain a temperature increase in the electric current limiter element (902) to a value below 40° C., in particular to a value below 35°, in particular to a value below 20°, the temperature increase being relative to an ambient temperature of (preferably 40° C. to 100° C) and/or
- to maintain an absolute temperature to a value below 140° C., in particular to a value below 135° C., and/or a junction temperature in the current limiter element to below 180° C, in particular to below 175° C, in particular to below 170° C.

10. The compressor according to at least one of claims 1 to 9, **characterized in that** the switch controller (901) is configured to maintain a switched-on time period (t_ON) and/or a switched-off time period (t_OFF) to below 1000 µs, in particular to below 800 µs, to below 600 µs, to below 400 µs and/or below 200 µs.

11. The compressor according to any of claims 1 to 10, **characterized in that** the compressor is a two-stage compressor (400) having at least a first and a second compressor stage (401, 402).

12. The compressor according to any of claims 1 to 11, **characterized in that**
- in order to delimit the operating current (IB) the program module (912) is configured to specify at least one threshold current limit function (GF) of the threshold current (IS) as a function of time (t), and
- the control component (911) is configured so as to interrupt an operating energy of the electric motor (500), in particular an operating voltage (UB).

13. The compressor according to any of claims 1 to 12, **characterized in that** the electronic control module (910), in particular an analyzing unit (930) and/or an actuating element (940) of the electronic control module is configured so as to check whether an operating current (IB) has achieved the threshold current (IS) of the at least one threshold limit function (GF) and/or to interrupt the operating energy in particular according to a predetermined interruption frequency (SR) and/or for the case that the operating current (IB) has achieved the threshold current (IS) of the at least one threshold limit function (GF).

14. The compressor according to any of claims 12 or 13, **characterized in that** it is possible to interrupt the operating energy in a variable manner by the switch controller (901) that is allocated to the control unit (900, 900') in accordance with the switched-on time period (t_ON) and/or the switched-off time period (t_OFF) for the electric motor (500).

15. The compressor according to any of the preceding claims, **characterized in that** the electronic control module (910) is configured to control a soft start-up (CSS) and/or a soft stop.

16. The compressor according to any of claims 1 to 15, **characterized in that**
- a start-up phase (AnP) including a soft start-up (CSS) of the compressor is changed to a load phase (LaP) only including an operation of the compressor (400) that is not current delimited independently of an operating current (IB) of the compressor (400), and/or
- a load phase (LaP) only including an operation of the compressor (400) that is not current delimited is changed to a deceleration phase (AusP) including a soft-stop of the compressor independently of the operating current (IB) of the compressor (400).

17. The compressor according to any of claims 1 to 16, **characterized in that** the electronic control module (910) is further configured to control a soft switching-off procedure to specify a time-delimited time phase of a switch-off operating current (IB) that is delimited in a variable manner with respect to time.

18. The compressor according to any of claims 1 to 17, **characterized in that** the electronic open-loop control unit (900) further comprises a first closed-loop control unit (921) that is configured to control the operating current (IB) of the electric motor whilst specifying the threshold current (IS) as a desired-current.

19. The compressor according to any of claims 1 to 18, **characterized in that** the electronic open-loop control unit (900) further comprises a closed-loop control module (920) having a second closed-loop control unit (922) that is configured so as to control a rotational speed of the electric motor (500), in particular whilst specifying a rotational speed (nK) upper limit that is constant time section-by-time section as a function of the operating current (IB) or a variable that is derived therefrom.

20. The compressor according to any of claims 1 to 19, **characterized in that** the control unit is configured so as to delimit a rotational speed variability of the electric motor (500) as a function of the operating current (IB) or of a variable that is derived therefrom by way of a PWM characteristic curve (PWM), preferably in the form of an effective voltage ramp (Ueff) which is stored in the program module (912) and is a function of the operating current (IB).

21. A compressed air supply system (1000) for operating a pneumatic system (1001), in particular of an air suspension system in a vehicle, the compressed air supply system comprising:
- a compressed air supply line (1) having a compressor (400') according to any of claims 1 to 20 for generating compressed air, including an electric motor (500) in the form of a brushed direct current electric motor (BDC electric motor) and a compressor (400),
- a compressed air connection (2) to the pneumatic system (1001),
- a ventilation connection (3) to the environment
- a first pneumatic connection between the compressed air supply line (1) and the compressed air connection (2), the first pneumatic connection including an air dryer (180) and a separating valve,
- a second pneumatic connection between the compressed air connection (2) and the ventilation connection (3).

22. A pneumatic system having the compressed air supply system (1000) according to claim 21 and having a pneumatic system (1001), wherein the pneumatic system (1001) is configured in the form of an air suspension system that comprises a distributing arrangement (610) and at least one branch line (601, 602, 603, 604, 605) that is connected in a pneumatic manner to the distributing arrangement (610) and includes a bellows and/or a storage device (1011, 1012, 1013, 1014, 1015) and also a directional control valve (1111, 1112, 1113, 1114, 1115) that is arranged upstream of the bellows and/or the storage device.

23. A method for operating an electric motor in the form of a brushed direct current electric motor (BDC electric motor) within the scope of a compressor (400') according to any of claims 1 to 20 for generating compressed air for a compressed air supply system of a vehicle, the method comprising:
- an electric motor (500) and a compressor (400) driven by the electric motor (500), wherein
- a control unit (900, 900') for controlling the electric motor (500) is allocated to the electric motor (500) so as to delimit an operating current (IB) of the electric motor (500), **characterized in that**
- an electric current limiter element (902) in a free-running current path is allocated to the control unit (900, 900'), by means of which an operating current (IB) is limited in a variable manner, and
- the electric current limiter element (902) comprises a free-wheeling diode (D) and a power transistor (FET), which are arranged in series in the free-running current path, and wherein
- a switch controller (901) is allocated to the control unit (900, 900'), by means of which a switched-on time period (t_ON) and a switched-off time period (t_OFF) for the electric motor (500) is specified in a variable manner.

24. The method according to claim 23, **characterized in that**
- the switched-on time period (t_ON) for the electric motor (500) is specified in such a manner that the operating current is delimited, and/or
- the switched-off time period (t_OFF) for the electric motor (500) is specified in such a manner that the heat absorption of the current limiter element (902) is delimited.

25. The method according to any of claims 20 to 24, **characterized in that** the electric motor (500) is controlled by an electronic control module (910) configured to delimit the operating current (IB) of the electric motor (500) and wherein a threshold current (IS) that delimits the operating current (IB) is specified in a variable manner with respect to time by the electronic control module (910) comprising a control component (911) having an executable program module (912) .

26. The method according to any of claims 20 to 25, **characterized in that**
- at least one threshold current limit function (GF) of the threshold current (IS) is specified as a function of time (t) to limit the operating current (IB) by means of the executable program module (912), and an operation of the electric motor (500) is interrupted by means of the control component (911), in particular an operating voltage (UB) of the electric motor for the case that the operating current (IB) achieves the threshold current (IS) of the at least one threshold current limit function (GF) and/or
- it is possible to interrupt the operating energy in a variable manner by the switch controller (901) that is allocated to the control unit (900, 900') in accordance with the switched-on time period (t_ON) and/or the switched-off time period (t_OFF) for the electric motor (500).

27. The method according to any of claims 20 to 25, **characterized in that**, in particular by means of the switch controller (901),
- the switched-on time period (t_ON) and/or the switched-off time period (t_OFF) are specified for the electric motor (500) in a variable manner and in dependence upon an operating current and/or an operating voltage for the electric motor (500) .

28. The method according to any of claims 20 to 27, **characterized in that**, in particular by means of the switch controller (901), preferably in dependence upon an operating current and/or an operating voltage for the electric motor (500) ,
- the switched-on time period (t_ON) and/or the switched-off time period (t_OFF) are specified directly to the electric motor (500) in a variable manner, and/or
- are specified in a variable manner initially to the control unit (900, 900'), preferably modified by way of the control unit (900, 900') to the electric motor (500).

29. The method according to any of claims 20 to 28, **characterized in that**, in particular by means of the switch controller (901),
- the switched-off time period (t_OFF) is specified in a variable but fixed manner with reducing values with an increasing operating time of the electric motor (500) and/or for an increasing operating current/operating voltage for the electric motor (500), and/or
- the switched-on time period (t_ON) is specified in a variable but fixed manner with an increasing operating time of the electric motor (500) and/or for reducing values of the operating current and/or operating voltage for the electric motor (500), preferably directly after the start of operation of the electric motor (500).

## Revendications

1. Condensateur (400') destiné à produire un air comprimé, en particulier pour une installation d'alimentation en air comprimé (1000) d'un véhicule, avec :
- un moteur électrique (500) sous la forme d'un moteur électrique à courant continu (moteur électrique BDC) doté de balais
- un compresseur, qui peut être entraîné via le moteur électrique (500), dans lequel
- un dispositif de commande (900, 900') est attribué au moteur électrique (500) pour limiter son intensité de fonctionnement (IB),
**caractérisé en ce que**
- un élément limiteur d'intensité (902) électrique, monté en parallèle du moteur électrique (500) dans un chemin de roue libre, est attribué au dispositif de commande (900, 900'), lequel élément limiteur d'intensité est conçu pour limiter de façon variable l'intensité de fonctionnement (IB), et **en ce que**
- une commande de commutation (901) est attribuée au dispositif de commande (900, 900'), laquelle est conçue pour prédéfinir une durée d'enclenchement (t_ON) et une durée de coupure (t_OFF) pour le moteur électrique (500), et **en ce que**
l'élément limiteur d'intensité (902) électrique comprend une diode de roue libre (D) et un transistor de puissance (FET), lesquels sont agencés en série dans le chemin de roue libre.

2. Condensateur selon la revendication 1, **caractérisé en ce que**
- le dispositif de commande (900, 900') présente un module de commande (910) électronique, dans lequel le moteur électrique (500) peut être commandé, au moyen du module de commande (910) électronique du dispositif de commande (900, 900'), pour limiter une intensité de fonctionnement (IB) du moteur électrique (500), dans lequel
- le module de commande (910) électronique présente un bloc de commande (911) et un module de programme (912) exécutable, et qui est conçu avec ceux-ci pour limiter de façon variable dans le temps l'intensité de fonctionnement (IB).

3. Condensateur selon la revendication 1 ou 2, **caractérisé en ce que** le module de commande (910) électronique est conçu pour prédéfinir de façon variable dans le temps une intensité de seuil (IS) qui limite l'intensité de fonctionnement (IB).

4. Condensateur selon la revendication 1, **caractérisé en ce que** le transistor de puissance (FET) est exécuté en tant que MOS-FET avec diode de roue libre intégrée.

5. Condensateur selon au moins l'une des revendications 1 à 4, **caractérisé en ce que** le dispositif de commande (900, 900') et la commande de commutation (901) sont couplés dans le cadre d'un circuit de régulation et/ou de commande, dans lequel le circuit de régulation et/ou de commande est conçu, depuis le dispositif de commande (900, 900') et/ou la commande de commutation (901) :
- pour recevoir une intensité de fonctionnement et/ou une tension de fonctionnement pour le moteur électrique (500), dans la commande de commutation (901), en particulier de la part du dispositif de commande (900, 900') et/ou du moteur électrique (500), et
- pour éditer la durée d'enclenchement (t_ON) et la durée de coupure (t_OFF), de préférence au moyen d'un signal de contrôle, depuis la commande de commutation (901), en particulier vers le dispositif de commande (900, 900') et/ou le moteur électrique (500).

6. Condensateur selon au moins l'une des revendications 1 à 5, **caractérisé en ce que** l'élément limiteur d'intensité (902) électrique est monté en parallèle du moteur électrique (500), et celui-ci est conçu :
- pour délivrer une valeur réelle de l'intensité de fonctionnement et/ou d'une tension de fonctionnement vers le dispositif de commande (900, 900') et/ou vers la commande de commutation (901), et/ou
- pour recevoir une intensité de fonctionnement et/ou une tension de fonctionnement en fonction d'une valeur de consigne du dispositif de commande (900, 900') et l'intensité de fonctionnement de préférence en fonction d'un signal de contrôle, depuis la commande de commutation (901) vers le dispositif de commande (900, 900') et/ou le moteur électrique (500).

7. Condensateur selon au moins l'une des revendications 1 à 6, **caractérisé en ce que** la commande de commutation (901) est conçue pour prédéfinir de façon modifiable la durée d'enclenchement (t_ON) et/ou la durée de coupure (t_OFF)
de façon variable mais fixe, ou
de façon variable et ce faisant dynamique.

8. Condensateur selon au moins l'une des revendications 1 à 7, **caractérisé en ce que**
la commande de commutation (901) est conçue pour
- maintenir l'intensité de fonctionnement pour le moteur électrique (500) à une valeur inférieure à une intensité limite maximale de I_max = 30A et/ou
- maintenir un gradient de l'intensité de fonctionnement pour le moteur électrique (500) à une valeur inférieure à un gradient limite maximal de l'intensité de G_max = 300A/s.

9. Condensateur selon au moins l'une des revendications 1 à 8, **caractérisé en ce que** la commande de commutation (901) est conçue pour
- maintenir une augmentation de température relative à une température d'environnement (de préférence de 40° C à 100° C) dans l'élément limiteur d'intensité (902) électrique à une valeur inférieure à 40° C, de préférence inférieure à 35° C, de préférence inférieure à 20° C, et/ou
- maintenir une température absolue à une température inférieure à 140° C, en particulier inférieure à 135° C, en particulier inférieure à 130° C, et/ou une température de jonction dans l'élément limiteur d'intensité inférieure à 180° C, en particulier inférieure à 175° C, en particulier inférieure à 170° C.

10. Condensateur selon au moins l'une des revendications 1 à 9, **caractérisé en ce que** la commande de commutation (901) est conçue pour maintenir la durée d'enclenchement (t_ON) et/ou la durée de coupure (t_OFF) inférieure à 1000°µs, en particulier inférieure à 800°µs, inférieure à 600°µs, inférieure à 400°ps et/ou inférieure à 200'µs.

11. Condensateur selon l'une des revendications 1 à 10, **caractérisé en ce que** le compresseur est un compresseur à deux étages (400) avec au moins un premier et un second étage de compresseur (401, 402).

12. Condensateur selon l'une des revendications 1 à 11, **caractérisé en ce que**
- le module de programme (912) est conçu pour, afin de limiter l'intensité de fonctionnement (IB), prédéfinir au moins une fonction limite d'intensité de seuil (GF) de l'intensité de seuil (IS) en tant que fonction du temps (t), et
- le bloc de commande (911) est conçu pour interrompre une énergie de fonctionnement du moteur électrique (500), en particulier une tension de fonctionnement (UB) de celui-ci.

13. Condensateur selon l'une des revendications 1 à 12, **caractérisé en ce que** le module de commande (910) électronique, en particulier une unité d'analyse (930) et/ou un système d'actionnement (940), est conçu pour vérifier si l'intensité de fonctionnement (IB) atteint l'intensité de seuil (IS) de la au moins une fonction limite d'intensité de seuil (GF) et/ou pour interrompre l'énergie de fonctionnement, en particulier après une fréquence d'interruption (SR) prédéfinie et/ou dans le cas où l'intensité de fonctionnement (IB) atteint l'intensité de seuil (IS) de la au moins une fonction limite d'intensité de seuil (GF).

14. Condensateur selon l'une des revendications 12 ou 13, **caractérisé en ce que** l'énergie de fonctionnement est à interrompre de façon variable au moyen de la commande de commutation (901) attribuée au dispositif de commande (900, 900') en fonction de la durée d'enclenchement (t_ON) et/ou de la durée de coupure (t_OFF) pour le moteur électrique (500).

15. Condensateur selon l'une des revendications précédentes, **caractérisé en ce que** le module de commande (910) électronique est conçu pour commander un démarrage en douceur (CSS) et/ou un ralentissement en douceur.

16. Condensateur selon l'une des revendications 1 à 15, **caractérisé en ce que**
- un changement d'une phase de démarrage (AnP) - qui comprend un démarrage en douceur (CSS) du compresseur - à une phase de charge (LaP) - qui comprend uniquement une marche du compresseur (400) non limitée par l'intensité - se produit indépendamment d'une intensité de fonctionnement (IB) du compresseur (400), et/ou
- un changement d'une phase de charge (LaP) - qui comprend uniquement une marche du compresseur (400) non limitée par l'intensité - à une phase de ralentissement (AusP) - qui comprend un ralentissement en douceur du compresseur - se produit indépendamment d'une intensité de fonctionnement (IB) du compresseur (400).

17. Condensateur selon l'une des revendications 1 à 16, **caractérisé en ce que** le module de commande (910) électronique est en outre conçu pour commander une coupure en douceur de telle sorte qu'une phase temporelle limitée dans le temps d'une intensité de fonctionnement de coupure (IB) limitée de façon variable dans le temps soit prédéfinie.

18. Condensateur selon l'une des revendications 1 à 17, **caractérisé en ce que** le dispositif de commande (900) électronique présente en outre une première unité de régulation (921) qui est conçue pour réguler une intensité de fonctionnement (IB)du moteur électrique avec prédéfinition de l'intensité de seuil (IS) en tant qu'intensité de consigne.

19. Condensateur selon l'une des revendications 1 à 18, **caractérisé en ce que** le dispositif de commande (900) électronique présente en outre un module de régulation (920) avec une seconde unité de régulation (922) qui est conçue pour réguler une vitesse de rotation (nK) du moteur électrique (500), en particulier avec prédéfinition d'une limite supérieure de vitesse de rotation constante par endroits, en particulier en tant que fonction de l'intensité de fonctionnement (IB) ou d'une grandeur dérivée de celle-ci.

20. Condensateur selon l'une des revendications 1 à 19, **caractérisé en ce que** l'unité de régulation est conçue pour limiter une variabilité de vitesse de rotation du moteur électrique (500) en tant que fonction de l'intensité de fonctionnement (IB) ou d'une grandeur dérivée de celle-ci via une courbe caractéristique PWM (PWM), de préférence sous la forme d'une rampe de tension effective (Ueff) consignée en particulier dans le module de programme (912) en tant que fonction de l'intensité de fonctionnement (IB).

21. Installation d'alimentation en air comprimé (1000) destinée à faire fonctionner une installation pneumatique (1001), en particulier une installation de ressort pneumatique d'un véhicule, qui présente :
- une amenée d'air comprimé (1) avec un condensateur (400') selon l'une des revendications 1 à 20 destiné à produire un air comprimé, avec un moteur électrique (500) sous la forme d'un moteur électrique à courant continu (moteur électrique BDC) doté de balais et un compresseur (400),
- un raccord d'air comprimé (2) vers l'installation pneumatique (1001),
- un raccord de purge (3) vers l'environnement
- une première liaison pneumatique entre l'amenée d'air comprimé (1) et le raccord d'air comprimé (2), qui présente un dessiccateur (180) et une valve d'isolement,
- une seconde liaison pneumatique entre le raccord d'air comprimé (2) et le raccord de purge (3).

22. Système pneumatique avec l'installation d'alimentation en air comprimé (1000) selon la revendication 21 et avec une installation pneumatique (1001), dans lequel l'installation pneumatique (1001) est conçue sous la forme d'une installation de ressort pneumatique qui présente une galerie (610) et au moins un tuyau de raccordement (601, 602, 603, 604, 605) pneumatiquement raccordé à la galerie (610) avec un soufflet et/ou un accumulateur (1011, 1012, 1013, 1014, 1015), ainsi qu'un distributeur (1111, 1112, 1113, 1114, 1115) en amont du soufflet et/ou de l'accumulateur.

23. Procédé destiné à faire fonctionner un moteur électrique sous la forme d'un moteur électrique à courant continu (moteur électrique BDC) doté de balais dans le cadre d'un condensateur (400') selon l'une des revendications 1 à 20, pour produire un air comprimé pour une installation d'alimentation en air comprimé d'un véhicule, avec :
- un moteur électrique (500) et un compresseur (400) qui est entraîné via le moteur électrique (500), dans lequel
- un dispositif de commande (900, 900') est attribué au moteur électrique (500) pour commander le moteur électrique (500) afin de limiter une intensité de fonctionnement (IB) du moteur électrique (500),
**caractérisé en ce que**
- un élément limiteur d'intensité (902) électrique est attribué au dispositif de commande (900, 900') dans un chemin de roue libre, au moyen duquel une intensité de fonctionnement (IB) est limitée de façon variable, et
- l'élément limiteur d'intensité (902) électrique comprend une diode de roue libre (D) et un transistor de puissance (FET), lesquels sont agencés en série dans le chemin de roue libre, et dans lequel
- une commande de commutation (901) est attribuée au dispositif de commande (900, 900'), au moyen de laquelle une durée d'enclenchement (t_ON) et une durée de coupure (t_OFF) sont prédéfinies de façon variable pour le moteur électrique (500).

24. Procédé selon la revendication 23, **caractérisé en ce que**
- la durée d'enclenchement (t_ON) pour le moteur électrique (500) est prédéfinie de telle sorte que l'intensité de fonctionnement soit limitée, et/ou
- la durée de coupure (t_OFF) pour le moteur électrique (500) est prédéfinie de telle sorte que l'absorption de chaleur de l'élément limiteur d'intensité (902) électrique soit limitée.

25. Procédé selon l'une des revendications 20 à 24, **caractérisé en ce que** le moteur électrique (500) est commandé au moyen d'un module de commande (910) électronique, au moyen duquel une intensité de fonctionnement (IB) du moteur électrique (500) est limitée et au moyen du module de commande (910) électronique, qui présente un bloc de commande (911) avec un module de programme (912) exécutable, une intensité de seuil (IS) qui limite l'intensité de fonctionnement (IB) est prédéfinie de façon variable dans le temps.

26. Procédé selon l'une des revendications 20 à 25, **caractérisé en ce que**
- pour limiter l'intensité de fonctionnement (IB) au moyen du module de programme (912) exécutable, au moins une fonction limite d'intensité de seuil (GF) de l'intensité de seuil (IS) est prédéfinie en tant que fonction du temps (t), et le fonctionnement du moteur électrique (500) est interrompu au moyen du bloc de commande (911), en particulier une tension de fonctionnement (UB) de celui-ci, dans le cas où l'intensité de fonctionnement (IB) atteint l'intensité de seuil (IS) de la au moins une fonction limite d'intensité de seuil (GF), et/ou
- l'énergie de fonctionnement est à interrompre de façon variable au moyen de la commande de commutation (901) attribuée au dispositif de commande (900, 900') en fonction de la durée d'enclenchement (t_ON) et/ou de la durée de coupure (t_OFF) pour le moteur électrique (500).

27. Procédé selon l'une des revendications 20 à 25, **caractérisé en ce qu'**en particulier au moyen de la commande de commutation (901),
- la durée d'enclenchement (t_ON) et/ou la durée de coupure (t_OFF) pour le moteur électrique (500) est prédéfinie de façon variable et dépendante d'une intensité de fonctionnement et/ou d'une tension de fonctionnement pour le moteur électrique (500).

28. Procédé selon l'une des revendications 20 à 27, **caractérisé en ce que**, en particulier au moyen de la commande de commutation (901), de préférence de façon dépendante d'une intensité de fonctionnement et/ou d'une tension de fonctionnement pour le moteur électrique (500),
- la durée d'enclenchement (t_ON) et/ou la durée de coupure (t_OFF) est directement prédéfinie de façon variable pour le moteur électrique (500), et/ou
- tout d'abord prédéfinie de façon variable pour le dispositif de commande (900, 900'), de préférence prédéfinie pour le moteur électrique (500) en étant modifiée via le dispositif de commande (900, 900').

29. Procédé selon l'une des revendications 20 à 28, **caractérisé en ce que**, en particulier au moyen de la commande de commutation (901),
- la durée de coupure (t_OFF) est prédéfinie de façon variable mais fixe avec des valeurs décroissantes, à savoir avec une durée de fonctionnement en augmentation du moteur électrique (500) et/ou pour une intensité de fonctionnement/tension de fonctionnement en hausse pour le moteur électrique (500), et/ou
- la durée d'enclenchement (t_ON) est prédéfinie de façon variable mais fixe avec des valeurs croissantes, à savoir avec une durée de fonctionnement en augmentation du moteur électrique (500) et/ou pour des valeurs décroissantes d'intensité de fonctionnement et/ou de tension de fonctionnement pour le moteur électrique (500), de préférence immédiatement après le début de fonctionnement du moteur électrique (500).
